(19) **Europäisches Patentamt European Patent Office Office européen des brevets**

(11) **EP 3 957 045 B1**

(12) **FASCICULE DE BREVET EUROPEEN**

(45) Date de publication et mention de la délivrance du brevet:
**28.05.2025 Bulletin 2025/22**

(21) Numéro de dépôt: **20717237.0**

(22) Date de dépôt: **15.04.2020**

(51) Classification Internationale des Brevets (IPC):
**H04L 9/40** *(2022.01)*    **H04W 12/121** *(2021.01)*

(52) Classification Coopérative des Brevets (CPC):
**H04L 63/14; H04L 63/1408; H04W 12/121**

(86) Numéro de dépôt international:
**PCT/EP2020/060619**

(87) Numéro de publication internationale:
**WO 2020/212442 (22.10.2020 Gazette 2020/43)**

(54) **PROCÉDÉ ET DISPOSITIF DE TRAITEMENT D'UN MESSAGE D'ALERTE NOTIFIANT UNE ANOMALIE DÉTECTÉE DANS UN TRAFIC ÉMIS VIA UN RÉSEAU**

VERFAHREN UND VORRICHTUNG ZUR VERARBEITUNG EINER WARNMELDUNG, WELCHE DIE DETEKTION EINER ANOMALIE IN EINEM ÜBER EIN NETZWERK ÜBERTRAGENEN VERKEHR ANZEIGT

METHOD AND DEVICE FOR PROCESSING AN ALERT MESSAGE INDICATING THE DETECTION OF AN ANOMALY IN TRAFFIC TRANSMITTED VIA A NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.04.2019 FR 1904158**

(43) Date de publication de la demande:
**23.02.2022 Bulletin 2022/08**

(73) Titulaire: **Orange**
**92130 Issy-les-Moulineaux (FR)**

(72) Inventeurs:
• **SEDJELMACI, Hichem**
  **92326 CHÂTILLON CEDEX (FR)**
• **CAPO-CHICHI, Tony**
  **92326 CHATILLON CEDEX (FR)**

(56) Documents cités:
**US-A1- 2011 023 119**

• LORENZO FERNANDEZ MAIMO ET AL: "A Self-Adaptive Deep Learning-Based System for Anomaly Detection in 5G Networks", IEEE ACCESS, vol. 6, 1 January 2018 (2018-01-01), pages 7700 - 7712, XP055658661, DOI: 10.1109/ ACCESS.2018.2803446

**Description**

Technique antérieure

L'invention se rapporte au domaine général des télécommunications.

Elle concerne plus particulièrement un mécanisme permettant la détection d'attaques informatiques (ou « cyber-attaques ») dans un réseau de communications électroniques.

Le document de brevet de l'art antérieur US 2011/023119 A1 divulgue des technologies de mitigation des attaques à connaissance de topologie.

Aucune limitation n'est attachée à la nature du réseau. L'invention s'applique toutefois de façon privilégiée aux réseaux mobiles, et notamment aux réseaux mobiles de cinquième génération ou réseaux mobiles 5G.

Les réseaux mobiles 5G, avec les techniques de communication avancées qu'ils mettent en œuvre et les capacités nouvelles qu'ils offrent en matière notamment de débits, de volumes d'information et de connexion, ouvrent des perspectives d'usage inédites qui posent de véritables challenges en termes de cyber sécurité. Au cours des années précédentes, de nombreuses techniques de détection d'intrusion (ou IDS pour « Intrusion Detection Systems » en anglais) et de défense ont été développées, s'appuyant sur des approches proactives permettant d'une part, d'anticiper et de réduire les vulnérabilités dans les systèmes informatiques, et d'autre part, de déclencher des réactions de mitigation efficaces lorsque des attaques ou des intrusions sont détectées dans ces systèmes informatiques. Toutefois, la 5G, en raison de ses spécificités et de ses contraintes, rend inappropriées et inefficaces les techniques classiques de détection d'intrusion si celles-ci ne sont pas adaptées pour tenir compte de ces spécificités et de ces contraintes.

Le document de L. Fernandez Maimo et al. intitulé « A self-adaptive deep learning-based system for anomaly detection in 5G networks », IEEE Access, Special section on cyber-physical-social computing and networking, March 12, 2018, propose une architecture pour la détection de cyber attaques dans un réseau 5G, capable de s'adapter de façon automatique aux fluctuations du trafic dans le réseau. Le système proposé, qui s'appuie sur une technique d'apprentissage automatique profond (ou « deep learning » en anglais), peut décider de déployer davantage de ressources de calcul (via des fonctions réseaux virtualisées) ou d'adapter l'approche d'apprentissage ou le modèle de détection appliqué en fonction du contexte courant de cyberdéfense dans lequel il se trouve, ce contexte étant identifié par le système à partir du comportement du trafic.

L'architecture proposée dans le document de L. Fernandez Maimo et al. repose sur la collecte, par des équipements utilisateurs connectés au réseau, de différentes caractéristiques du trafic généré par ces équipements utilisateurs, et l'agrégation de ces caractéristiques par un module ASD (pour « Anomaly Symptom Detection » en anglais) de détection de symptômes d'anomalies situé au niveau du réseau d'accès. Le module ASD effectue une recherche rapide de symptômes d'anomalies en inspectant les caractéristiques agrégées. Les symptômes sont ensuite fournis à un module NAD (pour « Network Anomaly Detection » en anglais) de détection d'anomalies réseau situé dans le cœur de réseau. Dès qu'une anomalie est détectée, elle est notifiée à un module de surveillance et de diagnostic chargé d'analyser les causes de cette anomalie et de reporter ces causes à un gestionnaire de la politique de sécurité apte à prendre rapidement des actions appropriées, comme notamment l'adaptation de la configuration du système.

Dans le système proposé par L. Fernandez Maimo et al., la détection d'intrusions, bien que réalisée à partir des symptômes identifiés par les réseaux d'accès en analysant les caractéristiques de trafic collectées par les équipements utilisateurs, est centralisée au niveau du cœur de réseau. C'est dans le cœur de réseau que sont effectués les principaux traitements et calculs permettant de conclure si une intrusion est perpétrée contre le réseau. Cette architecture se traduit par un overhead (ou surplus) important dans le réseau, ce qui peut avoir un impact négatif sur la qualité de service et les performances du réseau.

Exposé de l'invention

L'invention permet notamment de remédier à cet inconvénient en proposant une approche hiérarchique selon laquelle la détection d'anomalies et d'intrusions est opérée à plusieurs niveaux, en tenant compte des contraintes des équipements appartenant à ces différents niveaux. Au sens de l'invention, plus le niveau hiérarchique augmente, plus les équipements appartenant à ce niveau hiérarchique disposent de visibilité sur le réseau et de ressources : ils sont donc en mesure de réaliser une détection plus fiable des intrusions liées à des attaques informatiques. Aucune limitation n'est attachée à la nature de ces attaques informatiques (virus, trojans, etc.).

Plus spécifiquement, l'invention propose de mettre à œuvre au niveau des équipements utilisateurs, au niveau de dispositifs du réseau (appartenant au réseau d'accès et/ou au cœur de réseau) et au niveau d'un centre d'opérations de sécurité (aussi communément désigné par SOC pour « Security Operations Center » en anglais) supervisant le réseau, des techniques de détection d'intrusions et/ou d'anomalies adaptées aux ressources disponibles au niveau de chacun de ces équipements, et qui tiennent compte, lors de leur exécution, des contraintes des équipements situés au(x) niveau(x) inférieur(s) afin d'être en mesure, si cela est pertinent, de leur faire un retour adapté. De telles contraintes peuvent être notamment des contraintes en termes de ressources (par exemple de mémoire, de stockage, ou encore de puissance de calcul) ou des contraintes en termes de performances réseau (telles que des contraintes de latence, de débit, etc.).

Ainsi, de cette sorte, l'invention exploite les avantages offerts à chaque niveau pour permettre une détection rapide et fiable des attaques informatiques susceptibles d'affecter un réseau et les équipements utilisateurs qui y sont connectés, sans impacter les performances du réseau.

L'invention s'appuie donc sur trois procédés, et sur les différents équipements aptes à mettre en œuvre ces procédés, à savoir un équipement utilisateur, un dispositif du réseau (qui peut être indifféremment localisé dans le réseau d'accès ou dans le cœur du réseau), et un centre d'opérations de sécurité supervisant le réseau.

Plus spécifiquement, l'invention vise un procédé de traitement, par un dispositif d'un réseau, d'un message d'alerte reçu d'un équipement utilisateur connecté au réseau, et notifiant une anomalie détectée par l'équipement utilisateur dans un trafic émis via le réseau. Le procédé de traitement comprend :

- une étape d'obtention, à partir du message d'alerte, d'au moins une information représentative d'au moins une contrainte de l'équipement utilisateur ;
- une étape de traitement, au moyen d'un algorithme de détection d'attaques informatiques, de caractéristiques du trafic fournies par l'équipement utilisateur et associées à l'anomalie détectée, l'algorithme de détection d'attaques informatiques étant sélectionné et/ou paramétré en fonction de ladite au moins une information ; et
- une étape de détermination en fonction d'un résultat de l'étape de traitement, et si une attaque informatique est détectée, de ladite au moins une information, d'une réponse à l'équipement utilisateur concernant l'anomalie détectée.

Corrélativement, l'invention concerne un dispositif d'un réseau comprenant :

- un module de réception, apte à recevoir un message d'alerte en provenance d'un équipement utilisateur connecté au réseau, ce message d'alerte notifiant une anomalie détectée par l'équipement utilisateur dans un trafic émis via le réseau ;
- un module d'obtention, configuré pour obtenir à partir du message d'alerte au moins une information représentative d'au moins une contrainte de l'équipement utilisateur ;
- un module de traitement, configuré pour traiter au moyen d'un algorithme de détection d'attaques informatiques des caractéristiques du trafic fournies par l'équipement utilisateur et associées à l'anomalie détectée, l'algorithme de détection d'attaques informatiques étant sélectionné et/ou paramétré en fonction de ladite au moins une information ; et
- un module de détermination, configuré pour déterminer en fonction d'un résultat de l'étape de traitement, et si une attaque informatique est détectée, de ladite au moins une information, une réponse à l'équipement utilisateur concernant l'anomalie détectée.

L'invention vise aussi un procédé de supervision, par un centre d'opérations de sécurité supervisant au moins un réseau, comprenant :

- une étape de réception, en provenance d'un dispositif du réseau, d'un message d'alerte notifiant une anomalie détectée par un équipement utilisateur connecté au réseau ou par le dispositif du réseau dans un trafic émis via ledit réseau, ce message d'alerte comprenant des caractéristiques du trafic obtenues par l'équipement utilisateur ou par le dispositif du réseau associées à l'anomalie détectée, et au moins une information représentative d'au moins une contrainte du dispositif du réseau ;
- une étape de traitement, au moyen d'un algorithme de détection d'attaques informatiques, des caractéristiques du trafic, l'algorithme de détection étant sélectionné et/ou paramétré en fonction de ladite au moins une information ; et
- une étape de détermination, en fonction d'un résultat de l'étape de traitement et, si une attaque est détectée, de ladite au moins une information, d'une réponse au dispositif du réseau et/ou à l'équipement utilisateur concernant l'anomalie détectée.

Corrélativement, l'invention concerne un centre d'opérations de sécurité supervisant au moins un réseau, comprenant :

- un module de réception, apte à recevoir en provenance d'un dispositif du réseau un message d'alerte notifiant une anomalie détectée par un équipement utilisateur connecté au réseau ou par le dispositif du réseau dans un trafic émis via le réseau, ce message d'alerte comprenant des caractéristiques du trafic obtenues par l'équipement utilisateur ou par le dispositif du réseau associées à l'anomalie détectée, et au moins une information représentative d'au moins une contrainte du dispositif du réseau ;

- un module de traitement, configuré pour traiter au moyen d'un algorithme de détection d'attaques informatiques, les caractéristiques du trafic, l'algorithme de détection étant sélectionné et/ou paramétré en fonction de ladite au moins une information ; et
- un module de détermination, configuré pour déterminer en fonction d'un résultat de l'étape de traitement et, si une attaque est détectée, de ladite au moins une information, une réponse au dispositif du réseau et/ou à l'équipement utilisateur concernant l'anomalie détectée.

L'invention vise aussi un procédé de notification, par un équipement utilisateur connecté à un réseau, comprenant :

- une étape de détection d'une anomalie dans un trafic émis via le réseau, à partir de caractéristiques du trafic obtenues par l'équipement utilisateur ;
- si l'équipement utilisateur est incapable de déterminer si l'anomalie détectée correspond à un comportement normal ou à une attaque informatique, une étape d'envoi, à un dispositif du réseau, d'un message d'alerte lui notifiant l'anomalie détectée, ce message d'alerte comprenant les caractéristiques du trafic et au moins une information représentative d'au moins une contrainte de l'équipement utilisateur ; et
- une étape de réception d'un message du dispositif de réseau concernant l'anomalie détectée élaboré en fonction de ladite au moins une information.

Corrélativement, l'invention concerne un équipement utilisateur connecté à un réseau, comprenant :

- un module de détection, configuré pour détecter une anomalie dans un trafic émis via le réseau à partir de caractéristiques du trafic obtenues par l'équipement utilisateur ;
- un module d'envoi, activé si l'équipement utilisateur est incapable de déterminer si l'anomalie détectée correspond à un comportement normal ou à une attaque informatique, ce module d'envoi étant configuré pour envoyer à un dispositif du réseau un message d'alerte lui notifiant l'anomalie détectée, ce message d'alerte comprenant les caractéristiques du trafic et au moins une information représentative d'au moins une contrainte de l'équipement utilisateur ; et
- un module de réception, apte à recevoir un message du dispositif de réseau concernant l'anomalie détectée élaboré en fonction de ladite au moins une information.

Enfin, l'invention vise également un système de surveillance d'un réseau comprenant :

- au moins un équipement utilisateur conforme à l'invention ;
- au moins un dispositif du réseau conforme à l'invention (qui peut être localisé dans le réseau d'accès du réseau ou dans le cœur du réseau) ; et
- un centre d'opérations de sécurité conforme à l'invention.

L'invention propose donc de déployer de manière hiérarchique des algorithmes (ou agents) de détection d'intrusions à différents niveaux qui vont coopérer les uns avec les autres de sorte à améliorer leur efficacité. Cette coopération se fait avantageusement en tenant compte des contraintes présentes à chaque niveau, quelle que soit la nature de ces contraintes (ex. matérielles, logicielles, performances réseau, sécurité, consommation d'énergie, etc.).

Ainsi par exemple, lorsqu'on considère un équipement utilisateur de type capteur, disposant de faibles ressources et ayant de fortes contraintes en termes de consommation d'énergie, on envisagera préférentiellement un algorithme de détection d'intrusions relativement simple et léger au niveau de cet équipement utilisateur, comme par exemple un algorithme basé sur la recherche dans le trafic transitant ou écouté par l'équipement utilisateur de signatures d'attaques prédéterminées et en nombre réduit. Un tel algorithme présente de façon connue des performances inférieures à un algorithme d'apprentissage automatique, plus consommateur en termes de ressources (temps de traitement, ressources de calcul, etc.).

Pour compenser ces moins bonnes performances (et un risque plus élevé de mauvaises détections), conformément à l'invention, si l'équipement utilisateur détecte une anomalie dans le trafic échangé via le réseau et qu'il n'est pas en mesure de statuer sur la nature de cette anomalie (autrement dit, de déterminer s'il s'agit d'un comportement normal ou d'une attaque), il notifie un dispositif du réseau selon l'invention de l'anomalie qu'il a détectée pour que celui-ci puisse procéder à une analyse plus poussée, à l'aide d'algorithmes de détection plus performants. Ce dispositif étant localisé dans le réseau (au niveau du réseau d'accès ou dans le cœur du réseau, autrement dit à un niveau hiérarchique supérieur par rapport à l'équipement utilisateur), il dispose de ressources matérielles plus importantes qu'un équipement utilisateur, a une meilleure visibilité sur le trafic échangé sur le réseau, et ne présente pas à proprement parler de contraintes en termes de consommation d'énergie. Il est donc possible d'utiliser au niveau de ce dispositif du réseau des algorithmes de détection plus performants tels que par exemple des algorithmes d'apprentissage automatique (ex. algorithmes d'apprentissage profond ou « deep learning » en anglais), qui peuvent permettre de statuer sur la nature de l'anomalie détectée par l'équipement utilisateur.

Avantageusement selon l'invention, le choix et le paramétrage des algorithmes utilisés au niveau du dispositif du réseau sont réalisés en tenant compte des contraintes de l'équipement utilisateur ; il en est de même de l'élaboration de la réponse apportée à l'équipement utilisateur concernant l'anomalie détectée par celui-ci. Grâce à cette disposition, on s'assure que l'équipement utilisateur bénéficie d'une réponse adaptée à ses contraintes lorsqu'il détecte une anomalie, c'est-à-dire, d'une réponse rapide s'il a une contrainte de latence forte, ou nécessitant un faible overhead (surplus de ressources de calcul, de signalisation, etc.) si ses ressources sont limitées, etc.

On note que si le dispositif du réseau détermine que l'anomalie est liée à un comportement normal du réseau, il peut s'abstenir de répondre au message d'alerte remonté par l'équipement utilisateur, en vue notamment de limiter la signalisation échangée sur le réseau et d'économiser encore davantage les ressources de l'équipement utilisateur (qui n'a de ce fait pas à traiter de message de réponse).

De même, si le dispositif du réseau n'est pas en mesure de déterminer à l'aide de l'algorithme de détection d'intrusion qu'il utilise, si l'anomalie qui lui a été rapportée est dû à un comportement normal ou à une attaque informatique, il sollicite un niveau hiérarchique supérieur, à savoir un centre d'opérations de sécurité supervisant le réseau (et éventuellement d'autres réseaux gérés par un même opérateur ou par des opérateurs différents). De façon connue en soi, un centre d'opérations de sécurité ou SOC est une plateforme permettant la supervision et l'administration de la sécurité d'un ou de plusieurs systèmes d'information, par exemple ici, d'un ou de plusieurs réseaux de communication. Il s'appuie, à cet effet, sur divers outils de collecte, de corrélation d'événements, d'analyse des activités sur les réseaux et sur les différents équipements qui les composent (ex. bases de données, applications, serveurs, équipements utilisateurs, etc.), ainsi que sur l'expertise d'analystes et de spécialistes en sécurité ; il peut disposer en outre de moyens d'intervention à distance. Autrement dit, il s'agit d'une entité de confiance dotée d'une grande expertise et permettant une détection précise et fiable des intrusions dans un réseau.

L'invention en s'appuyant sur les trois niveaux hiérarchiques précités offre une solution efficace de détection d'intrusions dans un réseau, particulièrement bien adaptée aux réseaux mobiles 4G et 5G et à la diversité des équipements utilisateurs susceptibles d'être connectés à ces réseaux. Elle permet de réagir rapidement et de manière pertinente en cas de détection d'une anomalie par un équipement utilisateur.

L'invention est par ailleurs relativement facile à mettre en œuvre, et peut être embarquée aisément dans des solutions de cyber sécurité telles que par exemple des solutions de type SIEM (pour « Security Information and Event Management »).

L'invention est très flexible et peut plus généralement être appliquée à tout type de réseaux (2G, 3G, 4G, 5G, etc.) en vue de les protéger des cyberattaques, y compris lorsque celles-ci sont complexes. Elle s'adapte à tout type de terminaux et plus généralement d'équipements utilisateurs, en tenant compte avantageusement de leurs contraintes.

Par exemple, dans un mode particulier de réalisation du procédé de traitement, ladite au moins une information obtenue par le dispositif du réseau est représentative d'au moins une contrainte en termes de ressources (matérielles, logicielles, etc.) et/ou de sécurité et/ou de performances réseau de l'équipement utilisateur.

Une telle contrainte en termes de ressources peut être notamment une contrainte de consommation d'énergie ou d'espace de stockage disponible. Une telle contrainte en termes de performances réseau peut être notamment une contrainte de latence, de bande passante, de débit, de temps de traitement d'informations fournies à l'équipement utilisateur ou de quantité de surplus d'informations fournies à l'équipement utilisateur. Une telle contrainte en termes de sécurité peut être un taux de détection d'attaques informatiques, un taux de faux positifs, ou un caractère critique de l'équipement utilisateur (s'il s'agit d'un véhicule par exemple, le risque encouru par ce véhicule en raison de la présence d'une attaque informatique peut être important et nécessiter une réaction rapide et adaptée au risque encouru).

Ces exemples ne sont donnés qu'à titre illustratif, et aucune limitation ne s'attache au type de contraintes auquel est sujet l'équipement utilisateur dès lors que le dispositif du réseau est informé de ces contraintes et peut ainsi les prendre en compte pour fournir une réponse adaptée à l'équipement utilisateur.

Comme mentionné précédemment, la prise en compte des contraintes peut se faire au niveau de l'algorithme de détection d'attaques informatiques sélectionné et appliqué par le dispositif du réseau pour analyser l'anomalie reportée par l'équipement utilisateur.

Ainsi, dans un mode de réalisation, l'algorithme de détection d'attaques informatiques utilisé peut être sélectionné par le dispositif du réseau parmi :

- un algorithme de détection basé sur des signatures d'attaques informatiques ; et
- un algorithme de détection par apprentissage automatique.

Un algorithme de détection par apprentissage automatique (par exemple de type deep learning) bénéficie, de façon connue, d'un meilleur taux de détection et d'un taux de détection de faux positifs plus faible qu'un algorithme de détection basé sur des signatures d'attaques informatiques, qui est quant à lui, généralement moins complexe et plus rapide à mettre en œuvre. Bien entendu ces exemples ne sont donnés qu'à titre illustratif et d'autres algorithmes de détection peuvent être envisagés dans le contexte de l'invention.

Outre la sélection de l'algorithme de détection d'attaques informatiques, c'est également le dimensionnement des paramètres de l'algorithme sélectionné qui peut tenir compte avantageusement des contraintes de l'équipement utilisateur. Ainsi, dans un mode particulier de réalisation, lorsqu'un algorithme de détection par apprentissage automatique est sélectionné lors de l'étape de traitement, la durée d'apprentissage considérée pour cet algorithme peut être paramétrée en fonction de ladite au moins une information représentative de la ou des contraintes de l'équipement utilisateur. Par exemple, si l'équipement utilisateur a de fortes contraintes en termes de latence, on peut sélectionner au niveau du dispositif du réseau une durée d'apprentissage permettant de respecter la latence supportée par l'équipement utilisateur.

De façon alternative, lorsqu'un algorithme de détection basé sur des signatures d'attaques informatiques est considéré, c'est le nombre de signatures utilisées qui peut être dimensionné en fonction des contraintes de l'équipement utilisateur (pour être en mesure de répondre plus ou moins rapidement selon ces contraintes).

Dans un mode particulier de réalisation du procédé de traitement :

- l'étape de traitement comprend la détection d'une attaque informatique contre un équipement utilisateur connecté au réseau et/ou contre un élément du réseau ; et
- l'étape de détermination comprend l'évaluation d'une fonction dite d'efficacité à partir d'au moins une métrique dérivée de ladite au moins une information et d'une capacité de détection d'attaques par l'équipement utilisateur, la réponse étant déterminée en fonction de la valeur de la fonction d'efficacité.

Ce mode de réalisation permet d'apporter une réponse à l'équipement utilisateur concernant l'anomalie détectée (qui en l'espèce provient d'une attaque) qui vérifie un compromis entre les contraintes de l'équipement utilisateur et la précision de la détection d'attaques mise en œuvre par celui-ci, ce compromis étant modélisé par la fonction d'efficacité. Cette fonction d'efficacité peut être notamment une somme pondérée d'un premier paramètre évalué à partir de la ou des contraintes de l'équipement utilisateur et d'un second paramètre reflétant la capacité de détection d'attaques atteinte au niveau de l'équipement utilisateur. Une telle capacité est par exemple donnée par le ratio du nombre d'attaques détectées par le dispositif du réseau sur le nombre d'anomalies remontées par l'équipement utilisateur sur lesquelles il n'a pas été en mesure de statuer.

Via l'évaluation de la fonction d'efficacité, le dispositif du réseau met en balance les contraintes de l'équipement utilisateur et la précision de la détection d'attaques et élabore une réponse à l'équipement utilisateur concernant l'attaque qu'il a détecté offrant un compromis entre ces deux paramètres. S'agissant d'une attaque que l'équipement utilisateur n'a pas été en mesure de détecter, cette réponse peut notamment comprendre de nouvelles signatures et/ou de nouveaux attributs à appliquer par l'équipement utilisateur pour améliorer sa capacité de détection d'attaques et en particulier être en mesure de détecter une attaque du type de celle ayant provoqué l'anomalie remontée par l'équipement utilisateur.

Plus particulièrement, dans un mode de réalisation particulier, la réponse déterminée par le dispositif du réseau peut comprendre l'envoi d'un message à l'équipement utilisateur comprenant N signatures et/ou attributs de l'attaque obtenues par le dispositif du réseau, N désignant un nombre entier dépendant de la valeur de la fonction d'efficacité.

Le nombre N peut croître notamment avec la valeur de la fonction d'efficacité. Ainsi, lorsque la fonction d'efficacité a une valeur supérieure à un seuil dit haut, toutes les signatures et/ou attributs de l'attaque détectée par le dispositif du réseau connus de celui-ci peuvent être envoyés à l'équipement utilisateur. Inversement, en deçà d'un seuil dit bas, le dispositif du réseau peut décider de n'envoyer aucune nouvelle signature et aucun nouvel attribut à l'équipement utilisateur. Enfin si la valeur de la fonction d'efficacité évaluée se trouve entre le seuil bas et le seuil haut, le dispositif du réseau peut décider de n'envoyer qu'un sous-ensemble des signatures et/ou des attributs de l'attaque détectée dont il dispose, typiquement les signatures et/ou les attributs les plus pertinents (i.e. ceux qui se manifestent le plus souvent ou permettent d'identifier une attaque plus aisément) pour permettre une mise à jour de l'équipement utilisateur.

Dans un mode particulier de réalisation, le nombre N peut dépendre en outre d'autres facteurs, comme par exemple d'un facteur de coût fourni par l'équipement utilisateur.

Ce facteur de coût peut être choisi par le constructeur de l'équipement utilisateur et refléter ses exigences en matière de prise en compte des contraintes de l'équipement utilisateur. Il offre davantage de flexibilité en permettant une pondération additionnelle du nombre de signatures renvoyées à l'équipement utilisateur en fonction des contraintes qui sont critiques pour le constructeur.

On note que les signatures de l'attaque détectée par le dispositif du réseau peuvent lui être fournies par exemple par un centre d'opérations de sécurité supervisant le réseau.

Comme mentionné précédemment, dans un mode particulier de réalisation, si lors de l'étape de traitement, le dispositif du réseau est incapable de déterminer si l'anomalie détectée correspond à un comportement normal ou à une attaque informatique, le procédé de traitement comprend une étape d'envoi à un centre d'opérations de sécurité supervisant le réseau, d'un message d'alerte lui notifiant l'anomalie détectée par l'équipement utilisateur et comprenant les caractéristiques du trafic fournies par l'équipement utilisateur et associées à l'anomalie détectée et au moins une information représentative d'une contrainte du dispositif du réseau.

Ce mode de réalisation permet de bénéficier de l'expertise du centre d'opérations de sécurité tout en tenant compte des contraintes imposées au dispositif du réseau (qu'il s'agisse de contraintes propres à celui-ci et au notamment de contraintes réseau que celui-ci doit respecter, ou que ces contraintes lui soient imposées indirectement par l'équipement utilisateur).

On peut envisager d'autres cas de figure dans lesquels il est pertinent que le dispositif du réseau informe le centre d'opérations de sécurité de l'anomalie détectée par l'équipement utilisateur.

Ce peut être le cas quand le dispositif du réseau détecte lui-même localement une anomalie sur laquelle il n'est pas capable de statuer.

Ainsi, dans un mode particulier de réalisation, le procédé de traitement comprend en outre :

- une étape de détection par le dispositif du réseau, d'une anomalie dans un trafic émis sur le réseau à partir de caractéristiques du trafic obtenues par le dispositif du réseau ;
- une étape d'envoi à un centre d'opérations de sécurité supervisant le réseau pour analyse de l'anomalie détectée par le dispositif du réseau, d'un message de notification de cette anomalie comprenant lesdites caractéristiques du trafic obtenues par le dispositif du réseau et au moins une information représentative d'une contrainte du dispositif du réseau.

La notification du centre d'opérations de sécurité peut également se faire dans un but informatif, pour permettre au centre d'opérations de sécurité de maintenir à jour des statistiques sur le réseau et les attaques dont il fait l'objet.

Ainsi, dans un mode particulier de réalisation, le procédé de traitement comprend en outre si lors de l'étape de traitement, le dispositif du réseau détecte une attaque informatique contre un équipement utilisateur connecté au réseau et/ou contre un élément du réseau, une étape de notification d'un centre d'opérations de sécurité supervisant le réseau de l'attaque détectée.

Dans un mode particulier de réalisation de l'invention, le procédé de traitement, le procédé de supervision et/ou le procédé de notification sont mis en œuvre par un ordinateur.

L'invention vise également un premier programme d'ordinateur sur un support d'enregistrement, ce programme étant susceptible d'être mis en œuvre dans un ordinateur ou plus généralement dans un dispositif de réseau conforme à l'invention et comporte des instructions adaptées à la mise en œuvre d'un procédé de traitement tel que décrit ci-dessus.

L'invention vise aussi un deuxième programme d'ordinateur sur un support d'enregistrement, ce programme étant susceptible d'être mis en œuvre dans un ordinateur ou plus généralement dans un centre d'opérations de sécurité conforme à l'invention et comporte des instructions adaptées à la mise en œuvre d'un procédé de supervision tel que décrit ci-dessus.

L'invention concerne enfin un troisième programme d'ordinateur sur un support d'enregistrement, ce programme étant susceptible d'être mis en œuvre dans un ordinateur ou plus généralement dans un équipement utilisateur conforme à l'invention et comporte des instructions adaptées à la mise en œuvre d'un procédé de notification tel que décrit ci-dessus.

Chacun de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'information ou un support d'enregistrement lisibles par un ordinateur, et comportant des instructions du premier, du deuxième ou du troisième programme d'ordinateur mentionné ci-dessus.

Les supports d'information ou d'enregistrement peuvent être n'importe quelle entité ou dispositif capable de stocker les programmes. Par exemple, les supports peuvent comporter un moyen de stockage, tel qu'une ROM, par exemple un CD ROM ou une ROM de circuit microélectronique, ou encore un moyen d'enregistrement magnétique, par exemple un disque dur, ou une mémoire flash.

D'autre part, les supports d'information ou d'enregistrement peuvent être des supports transmissibles tels qu'un signal électrique ou optique, qui peut être acheminé via un câble électrique ou optique, par lien radio, par lien optique sans fil ou par d'autres moyens.

Les programmes selon l'invention peuvent être en particulier téléchargés sur un réseau de type Internet.

Alternativement, chaque support d'informations ou d'enregistrement peut être un circuit intégré dans lequel un programme est incorporé, le circuit étant adapté pour exécuter ou pour être utilisé dans l'exécution du procédé de communication, conforme à l'invention, ou du procédé de sélection, conforme à l'invention.

On peut également envisager, dans d'autres modes de réalisation, que le procédé de traitement, le procédé de notification, le procédé de supervision, le dispositif du réseau, l'équipement utilisateur, le centre d'opérations de sécurité et le système de surveillance selon l'invention présentent en combinaison tout ou partie des caractéristiques précitées.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

[Fig. 1] la figure 1 représente dans son environnement, un système de surveillance conforme à l'invention dans un mode particulier de réalisation ;
[Fig. 2] la figure 2 représente les principales étapes d'un procédé de notification selon l'invention, dans un mode particulier de réalisation ;
[Fig. 3] la figure 3 représente les principales étapes d'un procédé de traitement selon l'invention, dans un mode particulier de réalisation ; et
[Fig. 4] la figure 4 représente les principales étapes d'un procédé de supervision selon l'invention, dans un mode particulier de réalisation.

Description de l'invention

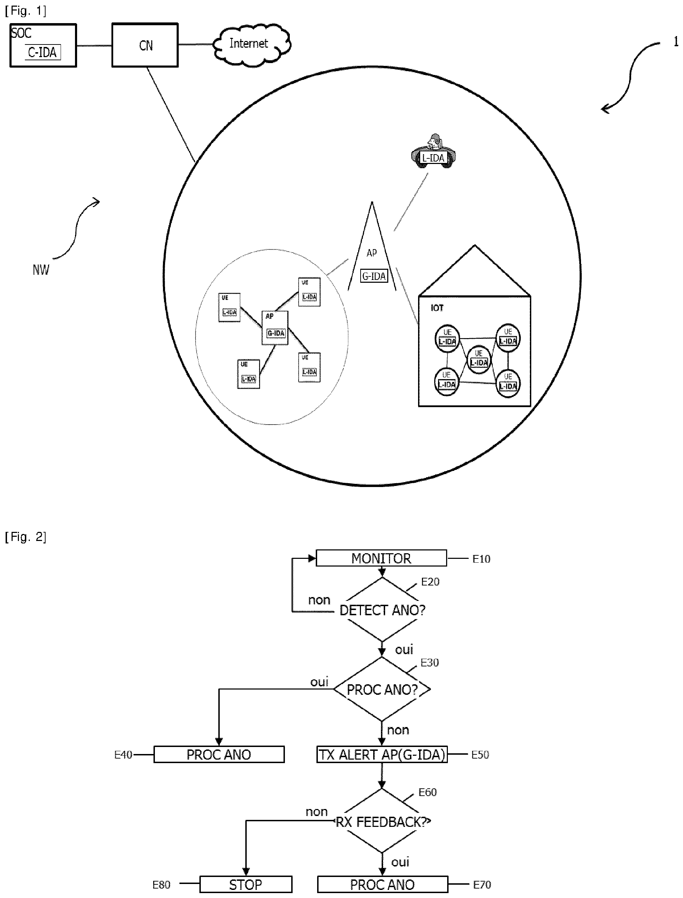

La **figure 1** illustre, dans son environnement, un système 1 de surveillance d'un réseau de communications NW, conforme à l'invention, dans un mode particulier de réalisation.

Dans l'exemple envisagé sur la figure 1, le réseau NW est un réseau de communications 5G (5ème Génération) comprenant un cœur de réseau CN auquel les équipements des utilisateurs du réseau peuvent se connecter par l'intermédiaire d'un réseau d'accès, tel que par exemple un réseau d'accès mobile cellulaire. Ces hypothèses ne sont toutefois pas limitatives et l'invention s'applique à d'autres types de réseaux, comme par exemple à des réseaux 2G, 3G ou encore 4G.

De façon connue en soi, les réseaux 5G tels que le réseau NW offrent la possibilité à une grande diversité d'équipements utilisateurs (référencés de manière générale ici par UE), de bénéficier d'une connectivité (i.e. d'être « connectés ») : véhicules (ex. terrestres ou aéroportés), objets IoT (pour « Internet of Things » en anglais ou encore Internet des Objets) tels que des capteurs, des montres, etc., terminaux intelligents tels que des smartphones, tablettes numériques, ordinateurs portables, etc. Ces équipements utilisateurs sont de natures très diverses, permettent à leurs utilisateurs d'accéder à des services très diverses également, et peuvent de ce fait avoir des contraintes aussi bien matérielles que réseau différentes.

Ainsi par exemple, un objet connecté tel un capteur dispose de ressources de stockage, de calcul et d'énergie relativement faibles par rapport à un ordinateur ou à un véhicule.

Chacun de ces équipements utilisateurs UE est connecté au réseau NW par l'intermédiaire d'un point d'accès au réseau d'accès, généralement référencé dans la suite par AP. Un tel point d'accès peut être, suivant le réseau d'accès envisagé, une station de base BS, un nœud eNodeB, un nœud gNodeB, etc. Il s'agit d'un dispositif du réseau d'accès et a fortiori du réseau NW au sens de l'invention.

Comme mentionné précédemment, l'invention propose pour protéger efficacement le réseau 5G NW d'attaques informatiques (intrusions, virus, etc.), une approche hiérarchique selon laquelle la détection d'anomalies et d'intrusions (ou d'attaques) est opérée à plusieurs niveaux, en tenant compte des contraintes des équipements appartenant à ces différents niveaux. Plus spécifiquement, l'invention propose de mettre à œuvre au niveau des équipements utilisateurs UE (niveau qualifié de « local »), au niveau de dispositifs du réseau NW (dans l'exemple envisagé à la figure 1, au niveau des points d'accès AP notamment) (niveau qualifié de « global ») et au niveau d'un centre d'opérations de sécurité SOC (Security Operation Center) supervisant le réseau NW (niveau qualifié de « central »), des techniques de détection d'intrusions et/ou d'anomalies adaptées aux ressources disponibles au niveau de chacun de ces équipements, et qui tiennent compte, lors de leur exécution, des contraintes des équipements situés au(x) niveau(x) inférieur(s). De telles contraintes peuvent être notamment des contraintes en termes de ressources (par exemple de mémoire, de stockage, ou encore de puissance de calcul), des contraintes en termes de performances réseau (telles que des contraintes de latence, de débit, de temps de traitement d'informations fournies, de quantité d'informations en surplus fournies, etc.), ou encore des contraintes en termes de sécurité (telles qu'un taux de détection d'attaques, ou un taux de faux positifs, etc.).

Ainsi, dans l'exemple envisagé sur la figure 1, les équipements utilisateurs UE connectés au réseau NW et les points d'accès AP utilisés par ces équipements utilisateurs pour accéder au réseau NW sont respectivement des équipements utilisateurs et des dispositifs du réseau NW conformes à l'invention. Plus spécifiquement, les équipements utilisateurs UE embarquent chacun un agent dit « local » de détection d'intrusions, L-IDA (pour « Local Intrusion Detection Agent »), comprenant des moyens configurés pour mettre en œuvre les étapes d'un procédé de notification selon l'invention ; chaque point d'accès AP embarque de façon similaire un agent dit « global » de détection d'intrusions, G-IDA (pour « Global Intrusion Detection Agent »), comprenant des moyens configurés pour mettre en œuvre les étapes d'un procédé de traitement selon l'invention.

Dans une variante de réalisation, seule une partie des équipements utilisateurs UE et/ou des points d'accès AP embarquent des agents L-IDA et G-IDA respectivement.

Par ailleurs, le centre d'opérations de sécurité SOC supervisant le réseau NW est également conforme à l'invention, et embarque ici un agent dit « central » de détection d'intrusions, C-IDA (pour « Central Intrusion Detection Agent »), comprenant des moyens configurés pour mettre en œuvre un procédé de supervision selon l'invention. On note que le centre d'opérations de sécurité SOC peut également, dans un mode particulier de réalisation, superviser d'autres réseaux que le réseau NW.

Plus particulièrement, le centre d'opérations de sécurité SOC supervise et administre la sécurité du réseau NW (et éventuellement d'autres réseaux). Il s'appuie, à cet effet, sur divers outils de collecte, de corrélation d'événements, d'analyse des activités sur les réseaux et sur les différents équipements qui les composent (ex. bases de données, applications, serveurs, équipements utilisateurs, etc.), ainsi que sur l'expertise d'analystes et de spécialistes en sécurité ; il peut disposer en outre de moyens d'intervention à distance.

Dans le mode de réalisation décrit ici, les procédés de notification, de traitement et de supervision selon l'invention sont mis en œuvre respectivement au sein des agents L-IDA, G-IDA et C-IDA au moyen de composants logiciels et/ou matériels définissant différents modules fonctionnels dûment configurés pour mettre en œuvre les étapes des procédés précités (modules de détection, d'envoi et de réception notamment pour les agents L-IDA ; modules de réception, d'obtention, de traitement et de détermination notamment pour les agents G-IDA ; et modules de réception, de traitement et de détermination notamment pour l'agent C-IDA). On peut regrouper ces modules fonctionnels au niveau de chaque agent IDA, au sein de trois catégories plus générales de modules, à savoir :

- un module de surveillance ;
- un module de détection d'anomalies et/ou d'attaques ; et
- un module d'intervention ou de réaction.

Les composants logiciels précités peuvent être intégrés à un programme d'ordinateur conforme à l'invention. Les équipements utilisateurs UE, les points d'accès AP et/ou le centre d'opérations de sécurité SOC selon l'invention peuvent avoir par exemple l'architecture matérielle d'un ordinateur, et comprendre notamment un processeur, une mémoire vive, une mémoire morte, une mémoire flash non volatile, ainsi que des moyens de communication comprenant une ou plusieurs interfaces de communication. Dans le mode de réalisation décrit ici, la mémoire morte de l'ordinateur est un support d'enregistrement conforme à l'invention, lisible par le processeur et sur lequel est enregistré un programme d'ordinateur selon l'invention, qui comporte, selon l'équipement considéré, des instructions pour la mise en œuvre d'un procédé de notification selon l'invention (si l'équipement considéré est un équipement utilisateur), d'un procédé de traitement selon l'invention (si l'équipement considéré est un point d'accès ou plus généralement un dispositif du réseau) et d'un procédé de supervision (si l'équipement considéré est un centre d'opérations de sécurité).

On note que dans un autre mode de réalisation, d'autres dispositifs du réseau NW, et notamment des dispositifs se trouvant dans le cœur de réseau CN, peuvent embarquer des agents G-IDA tels que mentionnés ci-dessus et mettre en œuvre le procédé de traitement selon l'invention.

Nous allons maintenant décrire, en référence aux **figures 2-4,** les principales étapes d'un procédé de notification, d'un procédé de traitement et d'un procédé de supervision telles qu'elles sont mises en œuvre respectivement, dans un mode particulier de réalisation, par chaque équipement utilisateur UE, chaque point d'accès AP et par le centre d'opérations de sécurité SOC de la figure 1 dans un mode particulier de réalisation.

En référence à la figure 2, dans le mode de réalisation décrit ici, l'agent L-IDA de chaque équipement utilisateur UE est configuré pour surveiller le trafic entrant et sortant (autrement dit, les paquets de données entrants et sortants) de l'équipement utilisateur UE (étape E10). Il est en outre configuré ici pour surveiller le trafic entrant et/ou sortant d'autres équipements utilisateurs, se trouvant dans son voisinage radio par exemple et qu'il peut recevoir et écouter.

Pour opérer cette surveillance, l'agent L-IDA de l'équipement utilisateur UE s'appuie sur un module de surveillance configuré pour obtenir, à partir de l'analyse des paquets de données entrants et sortants des équipements surveillés, un certain nombre de caractéristiques du trafic échangé via le réseau NW, comme par exemple le type de protocoles ou de services correspondant aux paquets échangés, la durée des communications, le nombre de connexions échouées, le nombre de paquets perdus, etc. Certaines caractéristiques peuvent être extraites par le module de surveillance directement des paquets de données échangés (comme par exemple le type de protocoles ou de services correspondant aux paquets échangés ou la durée des communications) ; d'autres peuvent être obtenues par calcul, comme par exemple le nombre de paquets perdus, l'intensité du signal reçu, le débit d'envoi des paquets, la durée entre deux paquets consécutifs (aussi appelée « jitter » en anglais), etc. Ces différentes caractéristiques de trafic sont classiquement collectées lors de la détection d'intrusions dans un réseau, et la façon d'obtenir ces caractéristiques est connue de l'homme du métier et n'est pas décrite en détail ici.

On note toutefois que conformément à l'invention, les caractéristiques qui sont collectées par le module de surveillance de l'agent L-IDA peuvent être choisies et dimensionnées en fonction des contraintes de l'équipement utilisateur UE embarquant l'agent L-IDA. Ainsi, si celui-ci ne dispose que de peu de ressources de calcul et/ou de stockage, le module de surveillance peut collecter un nombre réduit de caractéristiques, judicieusement sélectionnées, et/ou limiter les caractéristiques qui ont besoin d'être calculées.

Les différentes caractéristiques du trafic collectées par le module de surveillance sont fournies à un module de détection d'anomalies et/ou d'attaques informatiques de l'agent L-IDA. Ce module de détection de l'agent L-IDA applique sur les différentes caractéristiques du trafic fournies, diverses règles de sécurité avec lesquelles il a été configuré qui lui permettant d'identifier dans le trafic surveillé la présence d'anomalies (par exemple en comparant certaines caractéristiques à des seuils d'alerte prédéfinis) et/ou de comportements malicieux liés à des attaques informatiques. Il implémente à cet effet en particulier un algorithme de détection d'attaques informatiques (aussi appelé algorithme de détection d'intrusions).

Différents algorithmes de détection d'attaques peuvent être mis en œuvre par l'agent L-IDA, comme par exemple un algorithme de détection basé sur des signatures d'attaques informatiques, ou encore un algorithme de détection par apprentissage automatique (ou « machine learning » en anglais).

Les algorithmes de détection basés sur des signatures d'attaques informatiques s'appuient sur l'analyse du trafic réseau entrant et sortant : les paquets de données échangés sont comparés, au moyen de règles de sécurité préétablies, avec une base de signatures représentatives d'attaques informatiques connues. Les règles de sécurité sont définies par des experts et peuvent être mises à jour au cours du temps, en fonction de la découverte de nouvelles attaques, de nouvelles signatures, etc. De tels algorithmes sont connus en soi et sont décrits par exemple dans le document de J.Ma et al. intitulé « Detecting Distributed Signature-based Intrusion : the Case of Multi-Path Routing Attacks », IEEE Infocom, pp. 558-566, 2015.

Les algorithmes de détection par apprentissage automatique sont généralement plus complexes que les algorithmes basés sur des signatures mais présentent un meilleur taux de détection et un taux plus faible de faux positifs. Ils peuvent être classés en trois catégories : algorithmes supervisés, non supervisés, et de renforcement. De tels algorithmes sont décrits plus en détail dans le document de P.V.Klaine et al. intitulé « A Survey of Machine Learning Techniques Applied to Self-Organizing Cellular Networks », IEEE Communications Surveys & Tutorials, vol. 19, n°4, pp. 2392-2431, 2017.

Le choix d'appliquer au niveau de l'agent L-IDA l'une ou l'autre de ces techniques de détection d'attaques est fait, conformément à l'invention, en fonction des contraintes de l'équipement utilisateur UE embarquant l'agent L-IDA, et notamment de ses contraintes matérielles (ressources matérielles disponibles, contraintes en termes de consommation d'énergie, etc.), de ses contraintes réseau (faible latence, etc.), et/ou de ses contraintes de sécurité (taux de détection d'attaques, taux de faux positifs, etc.).

Ainsi, par exemple pour un équipement utilisateur UE de type capteur, l'agent L-IDA applique préférentiellement un algorithme simple et peu consommateur en termes de ressources de calcul tel qu'un algorithme de détection basé sur la recherche de signatures d'attaques informatiques prédéterminées et/ou de règles de sécurité prédéterminées, préalablement fournies à l'équipement utilisateur et stockées dans l'une de ses mémoires. Si l'équipement utilisateur UE dispose de ressources de stockage limitées, seul un nombre réduit de signatures et/ou de règles de sécurité est stocké au niveau de l'équipement utilisateur UE, typiquement les signatures qui sont le plus représentatives d'attaques informatiques connues (autrement dit le plus souvent rencontrées pour ces attaques) et susceptibles d'affecter ce type d'équipement utilisateur.

Ainsi, non seulement le type d'algorithme de détection appliqué peut différer en fonction de l'équipement utilisateur, mais également le paramétrage de cet algorithme, en vue de réaliser un compromis entre les contraintes de l'équipement utilisateur et le niveau de sécurité assuré. On évitera ainsi par exemple d'appliquer un algorithme d'apprentissage automatique non supervisé ou de renforcement au niveau d'un équipement utilisateur ayant des contraintes fortes en termes de ressources de calcul et de stockage comme un capteur, du fait de la complexité d'un tel algorithme.

En revanche, au niveau d'un équipement utilisateur tel un terminal mobile, les contraintes en termes de consommation d'énergie et de stockage du terminal mobile n'étant pas trop fortes, on pourra envisager l'application d'un algorithme d'apprentissage automatique supervisé léger (i.e. peu complexe) comme par exemple un algorithme de détection comportementale utilisant une machine à vecteurs de support (ou SVM pour Support Vector Machine en anglais) s'appuyant sur divers attributs comportementaux (ex. nombre de paquets supprimés, nombre de paquets envoyés, etc.) modélisant des attaques connues stockés au niveau de l'équipement utilisateur UE.

Au niveau d'un équipement utilisateur tel un véhicule, on pourra considérer un algorithme d'apprentissage automatique plus robuste comme un algorithme d'apprentissage automatique non supervisé ou un algorithme de renforcement. Toutefois la durée de l'apprentissage (paramètre de l'algorithme de détection au sens de l'invention) pourra varier en fonction de l'équipement utilisateur et de ses contraintes réseau, notamment de la latence supportée par l'équipement utilisateur.

Le tableau 1 ci-après illustre des exemples de compromis appliqués au niveau des équipements utilisateurs entre contraintes matérielles, réseau et sécurité, et configuration envisagée du module de détection d'anomalies et/ou d'attaques.

[Table 1]

| Equipements utilisateur | Contraintes matérielles | Contraintes réseau et sécurité | Configuration du module de détection |
|---|---|---|---|
| Terminal mobile (ex. téléphone intelligent) | Consommation d'énergie faible, stockage limité | Large bande passante ; Taux de détection d'attaques et de de faux positifs; Latence faible | Algorithmes basés sur des signatures ou algorithme d'apprentissage automatique léger (ex. SVM) |
| Objet connecté IoT (ex. capteur) | Consommation d'énergie très faible, stockage très limité | Faible bande passante ; Taux de détection d'attaques et de de faux positifs; Latence faible | Algorithmes basés sur des signatures, avec nombre de règles de sécurité limité |
| Système de transport intelligent (ex. véhicule autonome) | | Taux de détection d'attaques et de de faux positifs ; Latence ultra faible, et faible surplus (overhead) de communication | Algorithmes d'apprentissage automatique non supervisés ou de renforcement |

Si l'agent L-IDA ne détecte pas d'anomalies (réponse non à l'étape E20), il continue sa surveillance du trafic échangé sur le réseau NW. On note que préférentiellement, une surveillance active (i.e. en continu) du trafic est mise en œuvre par l'agent L-IDA. Toutefois, cette surveillance peut être suspendue temporairement (ex. basculer en mode veille) ou définitivement par l'équipement utilisateur UE en fonction du contexte, notamment s'il est jugé, par exemple par des experts en cyber sécurité, qu'il n'y a pas de risques d'attaques au niveau du réseau NW.

Si l'agent L-IDA détecte une anomalie dans le trafic (réponse oui à l'étape E20), deux situations peuvent alors se présenter (étape test E30) :

- l'agent L-IDA est en mesure de gérer lui-même cette anomalie (réponse oui à l'étape test E30), autrement dit, le module de détection de l'agent L-IDA a identifié que cette anomalie est liée à une attaque informatique que l'agent L-IDA sait traiter (par exemple, l'anomalie correspond à une signature d'une attaque informatique que le module de détection connait et l'agent L-IDA est configuré avec un traitement idoine à appliquer pour répondre à cette attaque), ou le module de détection de l'agent L-IDA a déterminé que l'anomalie qu'il a détectée est liée à un comportement normal du réseau : dans ce cas, l'agent L-IDA traite par lui-même l'anomalie détectée (étape E40), à savoir, si cette anomalie est liée à une attaque, il applique via son module d'intervention le traitement avec lequel il a été configuré pour répondre à l'attaque détectée, et s'il s'agit d'un comportement normal du réseau NW, il ne fait rien et continue sa surveillance du trafic. On note que le traitement appliqué par le module d'intervention en réponse à l'attaque détectée peut dépendre du type d'équipement utilisateur UE et/ou de la nature de l'attaque détectée (typiquement de sa gravité). Ainsi par exemple, si l'équipement utilisateur UE est un véhicule autonome, une réponse à l'attaque mise en œuvre par le module d'intervention peut consister à réduire la vitesse du véhicule afin d'éviter qu'un dommage critique affecte le véhicule (ex. crash du véhicule, altération de sa vitesse) ; une autre réponse peut être de déconnecter l'équipement utilisateur UE du réseau NW, ou de l'éteindre, etc. Préférentiellement, l'équipement utilisateur UE informe, via son module d'intervention, le point d'accès AP du réseau NW auquel il est connecté de la détection le cas échéant d'une attaque en lui indiquant la nature de cette attaque ainsi que les caractéristiques du trafic ayant permis sa détection. Ceci permet au dispositif du réseau NW de mettre à jour ses statistiques de détection et d'informer à son tour le centre de supervision SOC de l'attaque détectée. Ce dernier peut alors décider, en fonction de l'attaque détectée, d'une action complémentaire à celle appliquée par l'équipement utilisateur UE. En variante, l'équipement utilisateur UE peut informer directement le centre de supervision SOC de l'attaque qu'il a détectée ;

- l'agent L-IDA n'est pas en mesure de gérer lui-même cette anomalie (réponse non à l'étape test E30), autrement dit, il ne sait pas conclure sur la nature de l'anomalie qu'il a détectée et est incapable de déterminer si l'anomalie détectée correspond à un comportement normal du réseau ou à une attaque informatique : dans ce cas, le module d'intervention de l'agent L-IDA est configuré pour envoyer un message d'alerte, nommé ici ALERT, à un dispositif du réseau NW équipé d'un module G-IDA, à savoir ici au point d'accès AP auquel il est connecté pour accéder au réseau NW (étape E50). L'envoi de ce message d'alerte se fait via l'interface de communication de l'équipement utilisateur UE.

Le message d'alerte ALERT envoyé le cas échéant par le module d'intervention de l'agent L-IDA notifie le point d'accès AP, et plus particulièrement son agent G-IDA, de l'anomalie détectée par l'agent L-IDA de l'équipement utilisateur UE afin que celui-ci procède à une analyse plus approfondie de cette anomalie. Le message d'alerte ALERT comprend les caractéristiques du trafic ayant permis à l'agent L-IDA de détecter une anomalie (c'est-à-dire associées à cette anomalie), ainsi que, conformément à l'invention, au moins une information représentative d'au moins une contrainte de l'équipement utilisateur UE (ex. matérielle, réseau, sécurité, etc.). On note que pour informer le point d'accès AP et/ou le centre de supervision SOC d'une attaque qu'il a détectée le cas échéant (cf. ci-dessus), l'équipement utilisateur UE peut également utiliser le message ALERT.

Ladite au moins une information représentative de ladite au moins une contrainte de l'équipement utilisateur peut prendre différentes formes, notamment selon la nature de la ou des contraintes signalées par l'équipement utilisateur UE.

Dans le mode de réalisation décrit ici, le module d'intervention de l'agent L-IDA de l'équipement utilisateur UE évalue une fonction seuil, notée de façon générale TFx(UE), pour tout ou partie des contraintes dont il dispose : par exemple, une fonction seuil TFe(UE) pour ses contraintes en termes de consommation d'énergie, une fonction seuil TFm(UE) pour ses contraintes en termes de stockage et une contrainte TFl(UE) pour ses contraintes en termes de latence. Ces fonctions seuils représentent ici des taux et ont des valeurs comprises entre 0 et 1. Elles représentent respectivement les taux maximums d'énergie, de mémoire et de latence que l'agent G-IDA du point d'accès AP doit respecter pour l'équipement utilisateur UE pour la détection d'attaques. Elles reflètent les contraintes de l'équipement utilisateur en matière de consommation d'énergie, de stockage et de latence dont doit tenir compte le point d'accès et plus particulièrement l'agent G-IDA.

Plus particulièrement, dans le mode de réalisation décrit ici, le module d'intervention de l'agent L-IDA de l'équipement utilisateur UE calcule les valeurs des trois fonctions seuils linéaires suivantes :

$$TFe(UE)=a1.Te(UE)[1-E(UE)/Etot(UE)]+b1$$

$$TFm(UE)=a2.Tm(UE)[1-M(UE)/Mtot(UE)]+b2$$

$$TFl(UE)=a3.Tl(UE)[1-L(UE)/Ltot(UE)]+b3$$

où E(UE) désigne l'énergie consommée à un instant t considéré au niveau de l'équipement utilisateur UE pour la détection d'attaques et Etot(UE) l'énergie totale au niveau de l'équipement utilisateur UE dédiée à la détection d'attaques, M(UE) désigne la mémoire consommée de l'équipement utilisateur UE à l'instant t pour la détection d'attaques et Mtot(UE) la mémoire totale au niveau de l'équipement utilisateur UE dédiée à la détection d'attaques, L(UE) désigne la latence introduite à l'instant t par la détection d'attaques au niveau de l'équipement utilisateur UE et Ltot(UE) la latence maximale pouvant être supportée au niveau de l'équipement utilisateur UE pour la détection d'attaques. On note que l'instant t considéré est choisi pour refléter un état courant de la consommation de l'équipement utilisateur UE en termes d'énergie et de mémoire et la latence courante introduite au niveau de l'équipement utilisateur UE ; il peut s'agir par exemple de l'instant d'évaluation des fonctions TFe(UE), TFm(UE) et TFl(UE) ou de l'instant de détection de l'anomalie par l'équipement utilisateur UE.

Les valeurs Te(UE), Tm(UE), et Tl(UE) sont des valeurs réelles fixes comprises également entre 0 et 1: il s'agit de taux propres à chaque équipement utilisateur UE, et avec lesquels l'équipement utilisateur UE peut avoir été préalablement configuré (par exemple statiquement par son fabricant ou dynamiquement par l'opérateur du réseau NW). Ces valeurs Te(UE), Tm(UE), et Tl(UE) définissent respectivement un seuil maximal d'énergie, de mémoire et de latence qui peut être alloué au niveau de l'équipement utilisateur UE pour la détection d'attaques, compte tenu de l'énergie, de la mémoire et de la latence totales dont l'équipement utilisateur UE dispose à cet effet. Par exemple, si l'énergie totale dédiée au niveau de l'équipement utilisateur UE à la détection d'attaques est Etot(UE) (UE) =100J (joules) et l'énergie consommée par l'équipement utilisateur UE lors de la détection de l'anomalie est E(UE)=25J (joules), Te(UE)=85% (ou 0.85) signifie que 85% de 75J (i.e. 100J-25J) peuvent être encore alloués au niveau de l'équipement utilisateur UE à la détection d'attaques.

Les facteurs a1, a2, a3, b1, b2 et b3 sont des facteurs de pondération réels choisis entre 0 et 1 et de sorte à garantir des valeurs des fonctions TFe(UE), TFm(UE) et TFl(UE) comprises entre 0 et 1. Ils peuvent être déterminés par expérimentation ou par expertise. Ils sont introduits ici pour refléter l'importance des contraintes de consommation d'énergie, de stockage et de latence pour l'équipement utilisateur UE considéré, et peuvent permettre en fonction de leur choix de hiérarchiser ces contraintes entre elles. Ainsi, si la contrainte de consommation d'énergie est une contrainte forte pour l'équipement utilisateur UE considéré, le facteur a1 est choisi supérieur au facteur b1, et tend préférentiellement vers 1 tandis que le facteur b1 tend vers 0. Inversement, si l'équipement utilisateur UE n'a qu'une contrainte assez faible en termes de consommation d'énergie, a1 peut être choisi tendant vers 0 tandis que b1 tend vers 1. On note que si l'équipement utilisateur UE n'a aucune contrainte en termes de consommation d'énergie, on peut dans ce cas prendre a1=b1=Te(UE)=0.

Cet exemple des trois fonctions seuils TFe(UE), TFm(UE) et TFl(UE) évaluées et fournies par l'équipement utilisateur UE n'est donné qu'à titre illustratif, considérant que les contraintes de consommation d'énergie, de stockage et de latence sont les contraintes les plus courantes rencontrées au niveau des équipements utilisateurs. En variante, d'autres contraintes (ex. matérielles, réseau et/ou de sécurité) peuvent être envisagées en complément ou en remplacement des contraintes précitées. En outre, ces contraintes peuvent prendre d'autres formes que les fonctions seuils TFe(UE), TFm(UE) et TFI(UE) (par exemple on peut avoir a1=a2=a3=1 et b1=b2=b3=0).

Le module d'intervention de l'agent L-IDA de l'équipement utilisateur UE insère les valeurs calculées des fonctions TFe(UE), TFm(UE) et TFI(UE) dans le message ALERT envoyé au point d'accès AP, ainsi que les valeurs de E(UE), Etot(UE), M(UE), Mtot(UE), L(UE) et Ltot(UE), par exemple dans des champs du message prévus à cet effet. Ces valeurs sont des informations représentatives de contraintes de l'équipement utilisateur UE au sens de l'invention.

En variante, le module d'intervention de l'agent L-IDA de l'équipement utilisateur UE peut insérer dans le message ALERT envoyé au point d'accès les valeurs E(UE), Etot(UE), M(UE), Mtot(UE), L(UE) et Ltot(UE), Te(UE), Tm(UE), TI(UE) et les facteurs de pondération a1, b1, a2, b2, a3, b3, et c'est le point d'accès AP qui évalue les fonctions TFe(UE), TFm(UE) et TFI(UE) à partir des informations fournies par l'équipement utilisateur UE. Dans une autre variante encore, les facteurs de pondération a1, b1, a2, b2, a3, b3 peuvent être accessibles par le point d'accès AP auprès d'une base de données et ne pas être fournis par l'équipement utilisateur UE dans le message ALERT.

En variante, les informations représentatives des contraintes de l'équipement utilisateur UE peuvent prendre d'autres formes. Par exemple, l'équipement utilisateur UE peut spécifier dans le message ALERT un indicateur du type d'équipement auquel il appartient, cet indicateur étant associé dans une base de données pré-remplie, accessible par le point d'accès AP, à une ou plusieurs contraintes des équipements utilisateurs de ce type.

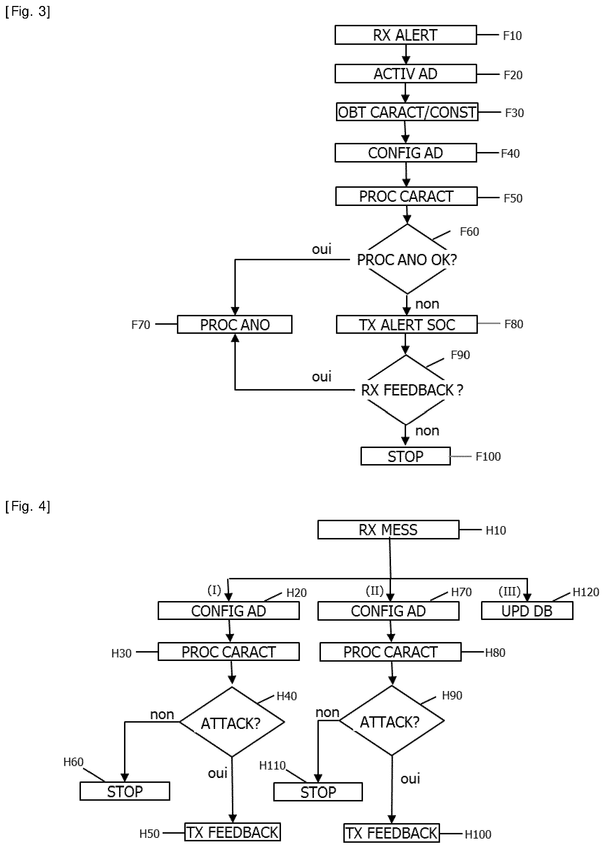

En référence à la figure 3, sur réception par le point d'accès AP d'un message d'alerte ALERT d'un équipement utilisateur UE (étape F10), l'agent G-IDA du point d'accès AP active son module de détection d'anomalies et d'attaques (étape F20).

Le module du point d'accès AP extrait du message ALERT reçu les caractéristiques du trafic collectées par l'équipement utilisateur UE et associées à l'anomalie que celui-ci a détectée (étape F30).

Il obtient par ailleurs à partir du message d'alerte ALERT reçu, des informations représentatives des contraintes de l'équipement utilisateur UE à l'origine du message (étape F30).

Dans le mode de réalisation décrit ici, ces informations sont les valeurs des fonctions seuils TFe(UE), TFm(UE) et TFI(UE) et les valeurs de E(UE), Etot(UE), M(UE), Mtot(UE), L(UE) et Ltot(UE) insérées par l'équipement utilisateur dans le message ALERT.

En variante, comme mentionné précédemment, l'agent G-IDA du point d'accès AP peut obtenir ces informations en rapprochant un indicateur du type de l'équipement utilisateur UE à l'origine du message ALERT contenu dans ce message, de contraintes auxquelles sont sujets les équipements utilisateurs de ce type, stockées par exemple dans une base de données accessible par le point d'accès AP (localisée ou non dans le réseau NW).

Puis le module de détection d'anomalies et d'attaques est configuré en fonction des contraintes ainsi identifiées pour l'équipement utilisateur UE (étape F40). Cette configuration comprend notamment la sélection d'un algorithme de détection d'attaques adapté aux contraintes de l'équipement utilisateur UE et/ou un paramétrage de l'algorithme de détection d'attaques appliqué par le module de détection adapté à ces contraintes.

On note que l'algorithme de détection d'attaques utilisé par le module de détection est également adapté aux contraintes du point d'accès AP. Toutefois, ce dernier se trouvant dans le réseau NW, ses contraintes, au moins matérielles, sont généralement moins importantes que celles de l'équipement utilisateur UE (notamment en termes de consommation d'énergie, de stockage ou encore de calcul). Le point d'accès AP peut par conséquent appliquer un algorithme de détection d'attaques plus complexe et plus robuste que celui appliqué par l'équipement utilisateur UE, présentant de meilleures performances en termes de taux de détection d'attaques et/ou de taux de faux positifs.

A titre d'exemple, lors de la configuration du module de détection, un algorithme de détection rapide à exécuter peut être sélectionné si l'équipement utilisateur UE a une contrainte importante voire ultra-importante en termes de latence (estimée à partir de la valeur de TFI(UE).[Ltot(UE)-L(UE)], par exemple par comparaison avec un seuil). Un tel algorithme peut être un algorithme basé sur des signatures dont le nombre de signatures considérées est choisi en fonction de la latence maximum pouvant être supportée par l'équipement utilisateur UE (donnée par la valeur de TFI(UE).[Ltot(UE)-L(UE)]), ou en variante un algorithme de détection par apprentissage automatique paramétré en fonction de la latence maximum donnée par la valeur TFI(UE).[Ltot(UE)-L(UE)]. Un exemple d'un tel paramétrage consiste par exemple à dimensionner la durée de l'apprentissage en fonction de la valeur TFI(UE).[Ltot(UE)-L(UE)], pour respecter cette valeur de latence maximale supportée par l'équipement utilisateur UE tout en garantissant un niveau de sécurité acceptable pour l'équipement utilisateur UE (en termes de taux de détection par exemple ou de faux positifs). Les valeurs de paramétrage peuvent être déterminées préalablement expérimentalement de sorte à vérifier une série de compromis prédéfinis par exemple, et permettre à l'agent G-IDA de rapidement sélectionner les paramètres adaptés aux contraintes en matière de sécurité, de contraintes réseau et de ressources matérielles de l'équipement utilisateur UE.

Le module de détection de l'agent G-IDA traite ensuite les caractéristiques du trafic extraites du message ALERT reçu avec l'algorithme de détection dûment configuré (étape F50).

On note que lors de ce traitement, le module de détection peut également utiliser des caractéristiques du trafic collectées par le point d'accès AP ou remontées par d'autres équipements utilisateur connectés au point d'accès AP, ou par d'autres points d'accès AP du réseau NW se trouvant par exemple dans son voisinage et aptes à communiquer avec lui. Il peut ainsi agréger un grand nombre de caractéristiques collectées et renforcer la robustesse de la détection mise en œuvre. Avantageusement, le point d'accès AP bénéficie d'une meilleure visibilité sur le trafic échangé via le réseau NW que chaque équipement utilisateur UE individuellement.

On note par ailleurs qu'une détection locale peut également être mise en œuvre indépendamment par le point d'accès AP via son module de détection à partir des caractéristiques collectées par le point d'accès AP, en vue de détecter des anomalies se manifestant au niveau du réseau NW. On a ainsi deux niveaux de détection opérés par le point d'accès AP : une détection locale des anomalies et d'attaques à partir des caractéristiques du trafic collectées par le point d'accès AP lui-même, et une détection d'attaques opérée sur les anomalies remontées par l'équipement utilisateur UE à partir des caractéristiques collectées par ce dernier. Pour la détection locale d'anomalies et d'attaques à partir des caractéristiques du trafic collectées par le point d'accès AP lui-même, le module de détection du point d'accès AP est configuré en tenant compte de ses propres contraintes. Le point d'accès AP peut en variante être doté de deux modules de détection distincts, un destiné à opérer sur les caractéristiques du trafic remontées par l'équipement utilisateur UE et configuré en fonction des contraintes de l'équipement utilisateur UE comme décrit précédemment, et un destiné à opérer sur les caractéristiques du trafic collectées localement par le point d'accès AP et configuré en fonction des contraintes de ce point d'accès AP.

Différentes situations peuvent se présenter selon le résultat du traitement opéré par le module de détection de l'agent G-IDA :

- l'agent G-IDA est en mesure de gérer lui-même l'anomalie remontée par l'équipement utilisateur UE (réponse oui à l'étape test F60), autrement dit, le module de détection de l'agent G-IDA a identifié que cette anomalie est liée à une attaque informatique que l'agent G-IDA sait traiter (par exemple, l'anomalie correspond à une signature d'une attaque informatique que le module de détection connait), ou le module de détection de l'agent G-IDA a déterminé que l'anomalie détectée par l'équipement utilisateur UE est liée à un comportement normal du réseau. Dans ce cas, l'agent G-IDA traite par lui-même l'anomalie détectée (étape F70), à savoir :

  si cette anomalie est liée à une attaque (contre un équipement utilisateur connecté au réseau ou contre un élément du réseau), il prépare via son module d'intervention une réponse destinée à l'équipement utilisateur UE pour lui permettre de répondre à cette attaque. La façon dont la réponse est déterminée est décrite plus en détail ultérieurement. Par ailleurs, dans le mode de réalisation décrit ici, le module d'intervention de l'agent G-IDA envoie un message de notification de l'attaque détectée au centre d'opérations de sécurité SOC supervisant le réseau NW. Ce message (qui peut être un message ALERT tel que décrit précédemment ou un autre message de notification) vise à alerter le centre d'opérations de sécurité SOC de l'attaque en cours afin que celui-ci mette à jour les informations dont il dispose sur le réseau NW et les attaques perpétrées contre ce réseau, et ainsi enrichir les bases de données et les statistiques qu'il maintient sur le ou les réseaux qu'il supervise. Il peut contenir les caractéristiques du trafic associées à l'attaque détectée et collectées par l'équipement utilisateur UE, mais également d'autres types d'informations collectées par exemple par le point d'accès. Le centre d'opérations de sécurité peut également prendre une décision quant à la gestion de l'attaque détectée et la ou les actions qui peuvent être mises en œuvre pour mitiger cette attaque : inscription de l'équipement utilisateur UE ou plus généralement de la ou des cibles suspectées de l'attaque sur une liste noire, mise à jour de clés cryptographiques, déploiement d'agents IDA dans la zone affectée, etc. ;

  s'il s'agit d'un comportement normal du réseau NW, dans le mode de réalisation décrit ici, le module d'intervention de l'agent G-IDA ne fait rien, i.e. il ne répond pas à l'équipement utilisateur UE afin de préserver la signalisation échangée avec ce dernier et ses ressources de traitement de la réponse ; le module d'intervention n'informe pas non plus le centre d'opérations de sécurité de l'anomalie remontée par l'équipement utilisateur UE. En variante, si l'anomalie détectée par l'équipement utilisateur UE est liée à un comportement normal du réseau NW, le module d'intervention de l'agent G-IDA répond à l'équipement utilisateur UE en lui signalant ce comportement normal ;

- l'agent G-IDA n'est pas en mesure de gérer lui-même l'anomalie (réponse non à l'étape test F60), autrement dit, il ne sait pas conclure sur la nature de l'anomalie que l'équipement utilisateur UE a détectée et en particulier, il est incapable de déterminer si l'anomalie détectée correspond à un comportement normal du réseau NW ou à une attaque informatique : dans ce cas, le module d'intervention de l'agent G-IDA est configuré pour envoyer un message d'alerte ALERT au centre d'opérations de sécurité SOC supervisant le réseau NW, pour analyse complémentaire de l'anomalie (étape F80). L'envoi de ce message d'alerte se fait via l'interface de communication du point d'accès AP.

Lorsque le module de détection de l'agent G-IDA détecte une attaque à partir de l'anomalie remontée par l'équipement utilisateur UE, le traitement de l'attaque détectée par le module d'intervention de l'agent G-IDA et la réponse qui est faite à l'équipement utilisateur UE concernant l'anomalie qu'il a détectée et remontée, dépend de plusieurs paramètres comme notamment de la nature et de la gravité de l'attaque, de la cible que l'on souhaite protéger de cette attaque, etc.

En outre, conformément à l'invention, le module d'intervention de l'agent G-IDA détermine (i.e. élabore) la réponse qu'il apporte à l'équipement utilisateur UE concernant l'anomalie qu'il a détectée en fonction des contraintes de cet équipement utilisateur UE.

Une telle réponse peut consister par exemple à envoyer dans un message de réponse à l'équipement utilisateur UE, nommé par la suite FEEDBACK, de nouvelles signatures et/ou de nouveaux attributs d'attaques (suivant l'algorithme de détection utilisé par l'agent L-IDA de l'équipement utilisateur UE) destinés à être appliqués par l'équipement utilisateur UE pour être en mesure de détecter des attaques du type de celle détectée par l'agent G-IDA. Ces nouvelles signatures (par exemple pour un algorithme de détection basé sur des signatures) et/ou ces nouveaux attributs (par exemple pour un algorithme de détection comportemental basé sur un apprentissage automatique) peuvent être par exemple les signatures et/ou les attributs qui ont été utilisés ou considérés le cas échéant par le module de détection de l'agent G-IDA pour détecter l'attaque. En variante, ils peuvent avoir été fournis à l'agent G-IDA par une entité IDS (Intrusion Detection System) externe, comme par exemple par le centre d'opérations de sécurité SOC.

Le nombre de signatures et/ d'attributs fournis dans le message FEEDBACK peut être dimensionné par le module d'intervention de l'agent G-IDA en fonction des contraintes de l'équipement utilisateur UE.

A cet effet, dans le mode de réalisation décrit ici, le module d'intervention de l'agent G-IDA évalue une fonction d'efficacité notée EF(UE), comprise entre 0 et 1, et définie par la somme pondérée suivante :

$$EF(UE)=E[a4.AD(UE)-b4.TF(UE)]$$

où E[] désigne l'espérance mathématique, a4 et b4 sont des facteurs de pondération réels compris entre 0 et 1 et déterminés expérimentalement en tenant compte par exemple des contraintes en matière de taux de détection d'attaques et des autres contraintes de l'équipement utilisateur, AD(UE) désigne la capacité (ou l'efficacité) de détection d'attaques par l'agent L-IDA de l'équipement utilisateur UE, et :

$$TF(UE)=(Te(UE)+Tm(UE)+Tl) \ (UE)/(TFe(UE)+TFm(UE)+TFl(UE))$$

La capacité de détection d'attaques (ou de nouvelles attaques) par l'agent L-IDA de l'équipement utilisateur UE peut être évaluée par le module d'intervention de l'agent G-IDA à partir de l'inverse du ratio du nombre d'anomalies remontées par l'équipement utilisateur UE (sur lesquelles l'équipement utilisateur UE n'a pas été en mesure de conclure à une attaque ou à un comportement normal) et du nombre d'attaques détectées le module de détection de l'agent G-IDA parmi ces anomalies.

En variante, la capacité de détection d'attaques par l'agent L-IDA de l'équipement utilisateur UE peut être évaluée de sorte à tenir compte également du taux de faux positifs détectés par l'équipement utilisateur UE.

On note que TF(UE) peut avoir été calculée par l'équipement utilisateur UE et être remontée par celui-ci dans le message ALERT envoyé au point d'accès AP (à la place ou en complément des valeurs de TFe(UE), TFm(UE) et TFl(UE)).

Grâce à la fonction d'efficacité EF(AP), le module d'intervention de l'agent G-IDA peut adapter sa réponse à l'équipement utilisateur UE en fonction d'un compromis choisi entre efficacité de la détection opérée par l'équipement utilisateur UE et contraintes matérielles/réseau/sécurité de cet équipement utilisateur UE. L'accent peut être mis davantage sur l'efficacité ou sur les contraintes via le choix des facteurs de pondération a4 et b4.

Plus particulièrement, dans le mode de réalisation décrit ici, le module d'intervention de l'agent G-IDA adapte le nombre N de signatures et/ou le nombre d'attributs (suivant l'algorithme de détection utilisée par l'agent L-IDA de l'équipement utilisateur UE) envoyés à l'équipement utilisateur UE en réponse à l'anomalie détectée par ce dernier en fonction de la valeur prise par la fonction d'efficacité EF(AP). Par exemple :

- si $0.7 \leq EF(AP) \leq 1$ : le module d'intervention envoie à l'équipement utilisateur UE toutes les nouvelles signatures de l'attaque connues/obtenues par l'agent G-IDA dans le message FEEDBACK (l'accent étant mis dans ce cas sur la capacité de détection des attaques de l'équipement utilisateur UE que l'on souhaite améliorer) ;
- si $0.1 \leq EF(AP) < 0.7$ : le module d'intervention envoie à l'équipement utilisateur UE un sous-ensemble seulement des nouvelles signatures et/ou de nouveaux attributs de l'attaque connus/obtenus par l'agent G-IDA dans le message FEEDBACK. Le nombre de nouvelles signatures et/ou de nouveaux attributs envoyés est par exemple pris égal à (AD/x)*100 où x désigne un facteur de coût maximal supporté par l'équipement utilisateur UE, et fourni par ce dernier (par exemple dans le message ALERT). Ce facteur de coût est choisi ici parmi les valeurs {2,3,4,5} ;
- si $EF(AP) < 0.1$ : le module d'intervention n'envoie aucune nouvelle signature ni aucun nouvel attribut à l'équipement utilisateur UE. Il peut toutefois lui signaler dans le message FEEDBACK que l'anomalie détectée par ce dernier est bien liée à une attaque informatique pour que celui-ci puisse prendre une action appropriée.

Cet exemple de détermination de la réponse apportée à l'équipement utilisateur UE en tenant compte des contraintes de ce dernier n'est donné qu'à titre illustratif, et n'est pas limitatif en soi. Ainsi, la réponse déterminée peut tenir compte d'autres contraintes, comme par exemple de contraintes en matière d'overhead de communication, et le nombre de signatures/d'attributs varier en fonction de cet overhead. Bien entendu, d'autres types de réponses peuvent être envoyés à l'équipement utilisateur UE, que des réponses contenant des nouvelles signatures et/ou de nouveaux attributs le cas échéant : ces réponses peuvent inclure notamment des informations de mise à jour lui permettant de se reconfigurer pour être plus robuste à l'attaque détectée, ou une ou plusieurs actions à mettre en œuvre par l'équipement utilisateur UE en réponse à l'attaque détectée, cette ou ces actions ayant été déterminées par l'agent G-IDA compte tenu des contraintes de l'équipement utilisateur UE (et de sa nature notamment), etc.

En outre, d'autres façons de déterminer la réponse apportée à l'équipement utilisateur UE qu'en considérant la fonction d'efficacité EF(AP) précitée peuvent être envisagées. Par exemple, le module d'intervention de l'agent G-IDA peut comparer directement entre elles les valeurs des fonctions AD(UE) et TF(UE).

En référence à la figure 2, le message FEEDBACK est reçu par l'équipement utilisateur UE (réponse oui à l'étape E60), et ce dernier, via son module d'intervention applique les actions contenues dans le message. Ainsi, à titre illustratif, si le message FEEDBACK contient une ou plusieurs nouvelles signatures, l'agent L-IDA de l'équipement utilisateur UE configure le module d'intervention pour qu'il applique ces nouvelles signatures lors d'une future mise en œuvre.

En référence à la figure 3, comme mentionné précédemment, si l'agent G-IDA n'est pas en mesure de statuer sur l'anomalie remontée par l'équipement utilisateur UE, le module d'intervention de l'agent G-IDA envoie un message d'alerte ALERT au centre d'opérations de sécurité SOC lors de l'étape F80. Ce message d'alerte ALERT notifie le centre d'opérations de sécurité SOC de l'anomalie détectée par l'équipement utilisateur UE et comprend les caractéristiques du trafic fournies par l'équipement utilisateur et associées à l'anomalie détectée. Il comprend également au moins une information représentative d'une contrainte du point d'accès AP.

Par exemple, si le point d'accès AP dispose d'une contrainte en termes de latence (ex. il supporte une latence maximale TI(AP).[L(AP)-Ltot(AP) avec les notations introduites précédemment pour l'équipement utilisateur UE transposées au point d'accès AP), cette information est, dans le mode de réalisation décrit ici, la valeur d'une fonction seuil TF(AP) calculée par le point d'accès AP et définie par :

$$TF(AP)=TI(AP)/TFI(AP)$$

avec TFI(AP)=a5.TI(AP).[1-L(AP)/Ltot(AP)]+b5, où a5 et b5 sont des facteurs de pondération réels compris entre 0 et 1, pouvant être déterminés expérimentalement et choisis de sorte à garantir une valeur de TFI(AP) comprise entre 0 et 1.

Bien entendu cet exemple n'est donné qu'à titre illustratif et n'est pas limitatif en soi. Les contraintes prises en compte dépendent du dispositif du réseau considéré embarquant l'agent G-IDA, si celui-ci se trouve dans le réseau d'accès ou dans le cœur de réseau du réseau NW, etc. Comme mentionné précédemment, l'invention ne se limite pas à embarquer des agents G-IDA au niveau des points d'accès du réseau d'accès du réseau NW ; de tels agents peuvent être embarqués dans d'autres dispositifs du réseau NW, en particulier dans des éléments sensibles du réseau, comme par exemple au niveau de serveurs, dans le cœur de réseau CN, dans des serveurs de périphérie, etc. Le tableau 2 ci-après illustre des exemples de dispositifs du réseau pouvant embarquer conformément à l'invention un agent G-IDA et de contraintes (essentiellement réseau et de sécurité) rencontrées au niveau de ces dispositifs, ainsi que les algorithmes de détection pouvant être mis en œuvre au niveau de ces dispositifs par leurs modules de détection. Tout ce qui a été décrit précédemment et ce qui est décrit ultérieurement en référence à l'agent G-IDA du point d'accès AP s'applique à chaque dispositif du réseau embarquant un tel agent G-IDA. Ainsi, pour un serveur SERV d'une plateforme de gestion des abonnés du réseau, la fonction TF(SERV) peut être une somme pondérée tenant compte du taux TFI(SERV) mais également d'un taux correspondant au débit devant être respecté par le serveur ainsi que d'un taux correspondant à sa bande passante.

[Table 2]

| Dispositifs du réseau | Contraintes réseau et sécurité | Configuration du module de détection |
|---|---|---|
| Serveurs d'une plateforme de gestion des abonnés du réseau | Très faible latence, haut débit et large bande passante ; Taux de détection d'attaques et de faux positifs, temps de détection Overhead de communication | Algorithmes d'apprentissage automatique non supervisés et/ou de renforcement |

(suite)

| Dispositifs du réseau | Contraintes réseau et sécurité | Configuration du module de détection |
|---|---|---|
| Serveurs CSCF ou serveur d'application d'une architecture IMS | Faible latence, haut débit et large bande passante ; Taux de détection d'attaques et de faux positifs, temps de détection Overhead de communication | Algorithmes d'apprentissage automatique non supervisés et/ou de renforcement |
| Serveur de calcul de périphérie mobile (ou MEC pour Mobile Edge Computing) | Faible latence, large bande passante ; Taux de détection d'attaques et de faux positifs, temps de détection Overhead de communication | Algorithmes d'apprentissage automatique non supervisés et/ou de renforcement |
| Passerelle ou serveur du cœur de réseau (ex. serveurs d'une entité de gestion de la mobilité (ou MME pour Mobility Management Entity), passerelle SGW ou PGW) | Très faible latence, haut débit et large bande passante ; Taux de détection d'attaques et de faux positifs, temps de détection Overhead de communication | Algorithmes d'apprentissage automatique non supervisés et/ou de renforcement |

On note qu'un message d'alerte ALERT similaire est envoyé par le module d'intervention de l'agent G-IDA du point d'accès AP si celui-ci détecte une anomalie à partir des caractéristiques qu'il a lui-même collectées localement via son module de surveillance et n'est pas en mesure de statuer sur cette anomalie (c'est-à-dire déterminer s'il s'agit d'une attaque ou d'un comportement normal du réseau NW). Le message d'alerte ALERT alors envoyé au centre d'opérations de sécurité SOC pour analyse complémentaire de l'anomalie détectée par le module de détection de l'agent G-IDA comprend les caractéristiques collectées par le module de surveillance de l'agent G-IDA ainsi que les informations TF(AP), L(AP) et Ltot(AP) représentatives des contraintes du point d'accès AP (contrainte en termes de latence dans l'exemple envisagé ici).

Si l'agent G-IDA est capable de statuer sur l'anomalie qu'il a détectée localement, il traite cette anomalie de façon similaire à ce qui a été décrit précédemment pour l'agent L-IDA. Autrement dit, si cette anomalie est liée à une attaque, il applique via son module d'intervention le traitement avec lequel il a été configuré pour répondre à l'attaque détectée et notifie le centre d'opérations de sécurité de l'attaque détectée, et s'il s'agit d'un comportement normal du réseau NW, il ne fait rien et continue sa surveillance du trafic. On note que le traitement appliqué par le module d'intervention en réponse à l'attaque détectée peut dépendre du type de dispositif de réseau considéré embarquant l'agent G-IDA et/ou de la nature de l'attaque détectée (typiquement de sa gravité).

En référence à la figure 4, on suppose que le centre d'opérations de sécurité SOC reçoit un message provenant d'un dispositif du réseau NW comme par exemple du point d'accès AP (étape H10).

Plusieurs cas de figure peuvent se présenter :

- cas (I) : le message reçu est un message ALERT notifiant le centre d'opérations de sécurité SOC de la détection d'une anomalie par un équipement utilisateur UE connecté au point d'accès AP (ou géré par lui) sur laquelle ni l'équipement utilisateur ni le point d'accès AP n'ont été en mesure de statuer, autrement dit de déterminer s'il s'agit d'une anomalie liée à une attaque ou à un comportement normal du réseau NW et des équipements utilisateurs qui y sont connectés ;
- cas (II) : le message est un message ALERT notifiant le centre d'opérations de sécurité SOC de la détection d'une anomalie par le point d'accès AP sur laquelle le point d'accès AP n'a pas été en mesure de statuer ;
- cas (III) : le message est un message de notification d'une attaque détectée par un équipement utilisateur ou par un point d'accès AP du réseau NW.

Dans le cas (I), le message ALERT reçu contient les caractéristiques du trafic associées à l'anomalie détectée par l'équipement utilisateur UE et collectées par celui-ci. Il contient également au moins une information représentative d'une contrainte du point d'accès AP (par exemple une contrainte de latence donnée par la valeur TF(AP) précédemment décrite).

Le module de détection de l'agent C-IDA embarqué dans le centre d'opérations de sécurité SOC est alors configuré en fonction de ladite au moins une information représentative de la contrainte du point d'accès (étape H20). Cette configuration comprend notamment la sélection d'un algorithme de détection d'attaques adapté aux contraintes du point d'accès AP et/ou un paramétrage de l'algorithme de détection d'attaques appliqué par le module de détection adapté à ces contraintes.

On note que le centre d'opérations de sécurité dispose d'une vue d'ensemble sur le ou les réseaux qu'il supervise et n'a pas à proprement parler de contraintes matérielles en termes de stockage, de consommation d'énergie ou de puissance de calcul. Il peut par conséquent appliquer un algorithme de détection d'attaques plus complexe et plus robuste que celui appliqué par l'équipement utilisateur UE et que celui appliqué par le point d'accès AP (par exemple des algorithmes de détection basés sur un apprentissage automatique profond ou « deep learning » en anglais, non supervisés ou de renforcement), présentant de meilleures performances en termes de taux de détection d'attaques et/ou de taux de faux positifs. Il peut bénéficier en outre de l'expertise d'analystes et de spécialistes en sécurité, qui peuvent fournir un avis humain sur les anomalies détectées via par exemple une interface utilisateur prévue à cet effet, et permettre de réduire notamment le taux de faux positifs détectés.

L'algorithme de détection appliqué par le module de détection peut être avantageusement paramétré en tenant compte des contraintes du point d'accès AP. A titre d'exemple, si une contrainte de latence est fournie dans le message ALERT par le point d'accès AP, et qu'un algorithme d'apprentissage automatique est utilisé par le module de détection, la durée de l'apprentissage peut être paramétrée de sorte à respecter la latence signalée par le point d'accès AP.

Le module de détection de l'agent C-IDA traite ensuite les caractéristiques du trafic extraites du message ALERT reçu avec l'algorithme de détection dûment configuré (étape H30).

On note que lors de ce traitement, le module de détection peut également utiliser des caractéristiques du trafic remontées par d'autres équipements utilisateur connectés au point d'accès AP, ou par d'autres points d'accès AP ou d'autres dispositifs du réseau NW qu'il supervise. Il peut ainsi agréger un grand nombre de caractéristiques collectées et renforcer la robustesse de la détection mise en œuvre.

Si suite au traitement des caractéristiques du trafic associées à l'anomalie détectée par l'équipement utilisateur UE, le module de détection de l'agent C-IDA détecte la présence d'une attaque (réponse oui à l'étape test H40), le module de réaction de l'agent C-IDA détermine une réponse à transmettre au point d'accès AP concernant l'anomalie en fonction de l'information de contrainte du point d'accès AP (étape H50).

Par exemple, si cette contrainte est une contrainte en termes de latence, le module d'intervention de l'agent C-IDA répond sans tarder au point d'accès AP en lui signalant par exemple dans un message FEEDBACK l'attaque détectée, et en insérant dans sa réponse au moins une action à mettre en œuvre pour mitiger l'attaque par le point d'accès AP et/ou par l'équipement utilisateur UE. Cette action peut consister par exemple en l'utilisation d'une ou de plusieurs nouvelles signatures de l'attaque et/ou de nouveaux attributs fournis par le centre d'opérations de sécurité, ou d'autres informations destinées à permettre au point d'accès AP de détecter une telle attaque.

Une autre action peut consister en une déconnexion de l'équipement utilisateur par le point d'accès, en un isolement du nœud malicieux (équipement utilisateur ou autre nœud du réseau NW), en une mise à jour de clés cryptographiques, en une information envoyée à des experts les notifications de la zone infectée par l'attaque, en une dissémination vers d'autres opérateurs, en une notification envoyée à l'utilisateur de l'équipement utilisateur UE, etc.

En variante, si la contrainte est une contrainte d'overhead de communication ou de bande passante, le module d'intervention de l'agent C-IDA peut moduler le nombre de nouvelles signatures transmises au point d'accès AP en fonction de cette contrainte. Pour déterminer le nombre de nouvelles signatures à transmettre, le module d'intervention de l'agent C-IDA peut procéder de façon similaire à ce qui a été décrit précédemment pour le module d'intervention de l'agent G-IDA, en évaluant une fonction d'efficacité $EP(SOC)$ à partir de la capacité $AD(SOC)$ de détection de nouvelles attaques par l'agent C-IDA et de la contrainte $TF(AP)$, et en modulant le nombre de signatures à transmettre en fonction de la valeur de la fonction d'efficacité $EP(SOC)$ obtenue (x désignant alors un facteur de coût du point d'accès AP, inclus par exemple par ce dernier dans le message ALERT).

Si en revanche, le module de détection de l'agent C-IDA détermine (par exemple via l'entremise de cyber-experts) que l'anomalie détectée est liée à un comportement normal (réponse non à l'étape test H40), alors le module d'intervention de l'agent C-IDA ne répond pas ici au message d'alerte envoyé par le point d'accès AP (étape H60).

En référence à la figure 3, si le point d'accès AP reçoit du centre d'opérations de sécurité SOC un message de réponse FEEDBACK à son message ALERT concernant l'anomalie remontée par l'équipement utilisateur UE (réponse oui à l'étape F90), cela signifie ici qu'une attaque a été détectée par le centre d'opérations de sécurité SOC à partir de cette anomalie. Le module d'intervention de l'agent G-IDA du point d'accès AP extrait du message FEEDBACK reçu la ou les actions préconisées par le centre d'opérations de sécurité SOC en réponse à l'attaque détectée, et élabore une réponse à l'équipement utilisateur UE (message FEEDBACK) à partir de cette ou ces actions en tenant compte des contraintes de l'équipement utilisateur UE, comme décrit précédemment (étape F70).

Si le point d'accès AP ne reçoit aucun message de réponse FEEDBACK à son message ALERT, alors cela signifie que l'anomalie remontée au centre d'opérations de sécurité correspond à un comportement normal des équipements utilisateurs et/ou du réseau NW. Le module de réaction de l'agent G-IDA du point d'accès AP ne transmet alors aucune réponse ici au message ALERT reçu de l'équipement utilisateur UE afin de préserver les ressources du réseau et de l'équipement utilisateur UE (étape F100). En variante, il peut signaler à l'équipement utilisateur UE que l'anomalie détectée par celui-ci est liée à un comportement normal.

On note que le module d'intervention de l'agent C-IDA peut également transmettre directement à l'équipement utilisateur UE un message FEEDBACK similaire à celui transmis au point d'accès AP en cas de détection d'une attaque. Cette communication directe entre le centre d'opérations de sécurité SOC et l'équipement utilisateur UE permet de renforcer la sécurité au sein du réseau NW et de gérer les situations où le point d'accès AP serait lui-même sujet à une attaque.

En référence à la figure 4, dans le cas (II), le message ALERT reçu contient les caractéristiques du trafic associées à l'anomalie détectée localement par le point d'accès AP et collectées par celui-ci. Il contient également au moins une information représentative d'une contrainte du point d'accès AP (par exemple une contrainte de latence donnée par la valeur TF(AP) précédemment décrite).

Le module de détection de l'agent C-IDA embarqué dans le centre d'opérations de sécurité SOC est alors configuré en fonction de ladite au moins une information représentative de la contrainte du point d'accès de façon similaire ou identique à ce qui a été décrit précédemment en référence à l'étape H20 (étape H70). Cette configuration comprend notamment la sélection d'un algorithme de détection d'attaques adapté aux contraintes du point d'accès AP et/ou un paramétrage de l'algorithme de détection d'attaques appliqué par le module de détection adapté à ces contraintes.

Le module de détection de l'agent C-IDA traite ensuite les caractéristiques du trafic extraites du message ALERT reçu avec l'algorithme de détection dûment configuré (étape H80).

Si suite au traitement des caractéristiques du trafic associées à l'anomalie détectée par le point d'accès AP, le module de détection de l'agent C-IDA détecte la présence d'une attaque (réponse oui à l'étape test H90), le module de réaction de l'agent C-IDA détermine une réponse à transmettre au point d'accès AP concernant l'anomalie en fonction de l'information de contrainte du point d'accès AP (étape H100). Il procède à cet effet de façon similaire ou identique à ce qui a été décrit précédemment pour l'étape H50.

Si en revanche, le module de détection de l'agent C-IDA détermine (par exemple via l'entremise de cyber-experts) que l'anomalie détectée est liée à un comportement normal (réponse non à l'étape test H90), alors le module d'intervention de l'agent C-IDA ne répond pas ici au message d'alerte envoyé par le point d'accès AP (étape H110).

En référence à la figure 3, si le point d'accès AP reçoit du centre d'opérations de sécurité SOC un message de réponse FEEDBACK à son message ALERT concernant l'anomalie qu'il a détectée localement et remontée au centre d'opérations de sécurité SOC (réponse oui à l'étape F90), cela signifie ici qu'une attaque a été détectée par le centre d'opérations de sécurité SOC à partir de cette anomalie. Le module d'intervention de l'agent G-IDA du point d'accès AP extrait du message FEEDBACK reçu la ou les actions préconisées par le centre d'opérations de sécurité SOC en réponse à l'attaque détectée, et met en œuvre ces actions (étape F70). Une telle action peut consister par exemple à mettre à jour les règles de sécurité appliquées par son module de détection d'attaques (ex. signatures, seuils de détection, etc.).

S'il ne reçoit pas de réponse FEEDBACK à son message ALERT concernant l'anomalie qu'il a détectée localement (réponse non à l'étape test F90), c'est que l'anomalie qu'il a détectée est liée à un comportement normal (étape F100). Le point d'accès AP continue sa surveillance locale du trafic échangé via le réseau NW.

En référence à la figure 4, dans le cas (III), le message de notification reçu par le centre d'opérations de sécurité est utilisé par ce dernier pour mettre à jour et enrichir les bases de données et les statistiques qu'il maintient sur le ou les réseaux qu'il supervise (étape H120). Le centre d'opérations de sécurité SOC peut également prendre une décision quant à la gestion de l'attaque détectée et la ou les actions qui peuvent être mises en œuvre pour mitiger cette attaque : inscription de l'équipement utilisateur UE ou plus généralement de la ou des cibles suspectées de l'attaque sur une liste noire, mise à jour de clés cryptographiques, déploiement d'agents IDA dans la zone affectée, etc. Le cas échéant, une ou plusieurs actions à exécuter en vue de mitiger l'attaque peuvent être transmises au point d'accès AP et/ou à l'équipement utilisateur UE, par exemple dans un message de réponse au message de notification.

L'invention propose donc un mécanisme innovant qui s'appuie sur le déploiement hiérarchique à divers niveaux d'un réseau, d'agents de détection d'intrusion (IDA) configurés pour collaborer entre eux afin d'améliorer la sécurité du réseau, et ce en permettant une meilleure détection (et mitigation) des attaques informatiques internes et/ou externes perpétrées contre ce réseau. L'invention permet de détecter de manière fiable et rapide des attaques dans un réseau tout en tenant compte des contraintes notamment matérielles, réseau ou de sécurité des différents équipements connectés à ce réseau ou appartenant à ce réseau. Elle permet également d'apporter une réponse aux attaques détectées appropriées qui tient compte de ces contraintes. L'invention est donc particulièrement bien adaptée pour les réseaux de 5ème génération qui offrent une connectivité à une grande variété d'équipements utilisateurs sujets à des contraintes très diverses.

**Revendications**

1. Procédé de traitement, par un dispositif (AP) d'un réseau (NW), d'un message d'alerte reçu d'un équipement utilisateur (UE) connecté au réseau, ledit message d'alerte notifiant une anomalie détectée par l'équipement utilisateur dans un trafic émis via le réseau, ledit procédé de traitement comprenant :

- une étape d'obtention (F30), à partir du message d'alerte, d'au moins une information représentative d'au moins une contrainte de l'équipement utilisateur ;
- une étape de traitement (F50), au moyen d'un algorithme de détection d'attaques informatiques, de caractéristiques du trafic fournies par l'équipement utilisateur et associées à l'anomalie détectée, l'algorithme de détection d'attaques informatiques étant sélectionné et/ou paramétré en fonction de ladite au moins une information ; et
- une étape de détermination (F70) en fonction d'un résultat de l'étape de traitement, et si une attaque informatique est détectée, de ladite au moins une information, d'une réponse à l'équipement utilisateur concernant l'anomalie détectée.

2. Procédé de traitement selon la revendication 1 dans lequel ladite au moins une information obtenue est représentative d'au moins une contrainte en termes de ressources et/ou de performances réseau de l'équipement utilisateur.

3. Procédé de traitement selon la revendication 2 dans lequel :

- la contrainte en termes de ressources est une contrainte de consommation d'énergie ou d'espace de stockage disponible ;
- la contrainte en termes de performances réseau est une contrainte de latence, de bande passante, de débit, de temps de traitement d'informations fournies à l'équipement utilisateur ou de quantité de surplus d'informations fournies à l'équipement utilisateur.

4. Procédé de traitement selon l'une quelconque des revendications 1 à 3 dans lequel l'algorithme de détection d'attaques informatiques est sélectionné parmi :

- un algorithme de détection basé sur des signatures d'attaques informatiques ;
- un algorithme de détection par apprentissage automatique.

5. Procédé de traitement selon la revendication 4 dans lequel, lorsqu'un algorithme de détection par apprentissage automatique est sélectionné lors de l'étape de traitement, une durée d'apprentissage considérée pour ledit algorithme est paramétrée en fonction de ladite au moins une information.

6. Procédé de traitement selon l'une quelconque des revendications 1 à 5 dans lequel :

- l'étape de traitement comprend la détection d'une attaque informatique contre un équipement utilisateur connecté au réseau et/ou contre un élément du réseau ; et
- l'étape de détermination comprend l'évaluation d'une fonction dite d'efficacité à partir d'au moins une métrique dérivée de ladite au moins une information et d'une efficacité de détection d'attaques par l'équipement utilisateur, la réponse étant déterminée en fonction de la valeur de la fonction d'efficacité.

7. Procédé de traitement selon la revendication 6 dans lequel la réponse déterminée comprend l'envoi d'un message à l'équipement utilisateur comprenant N signatures et/ou attributs de l'attaque obtenues par le dispositif du réseau, N désignant un nombre entier dépendant de la valeur de la fonction d'efficacité.

8. Procédé de traitement selon la revendication 7 dans lequel N dépend en outre d'un facteur de coût fourni par l'équipement utilisateur.

9. Procédé de traitement selon la revendication 7 ou 8 dans lequel les signatures et/ou attributs de l'attaque sont obtenues par le dispositif du réseau d'un centre d'opérations de sécurité supervisant ledit réseau.

10. Procédé de traitement selon l'une quelconque des revendications 1 à 9 comprenant, si lors de l'étape de traitement, le dispositif du réseau est incapable de déterminer si l'anomalie détectée correspond à un comportement normal ou à une attaque informatique, une étape d'envoi (F80) à un centre d'opérations de sécurité (SOC) supervisant le réseau, d'un message d'alerte lui notifiant l'anomalie détectée par l'équipement utilisateur et comprenant les caractéristiques du trafic fournies par l'équipement utilisateur et associées à l'anomalie détectée et au moins une information représentative d'une contrainte du dispositif du réseau.

11. Procédé de traitement selon l'une quelconque des revendications 1 à 10 comprenant en outre :

- une étape de détection par le dispositif du réseau, d'une anomalie dans un trafic émis sur le réseau à partir de caractéristiques du trafic obtenues par le dispositif du réseau ;

- une étape d'envoi à un centre d'opérations de sécurité (SOC) supervisant le réseau pour analyse de l'anomalie détectée par le dispositif du réseau, d'un message de notification de cette anomalie comprenant lesdites caractéristiques du trafic obtenues par le dispositif du réseau et au moins une information représentative d'une contrainte du dispositif du réseau.

12. Procédé de traitement selon l'une quelconque des revendications 1 à 11 comprenant en outre si lors de l'étape de traitement, le dispositif du réseau détecte une attaque informatique contre un équipement utilisateur connecté au réseau et/ou contre un élément du réseau, une étape de notification d'un centre d'opérations de sécurité supervisant le réseau de l'attaque détectée.

13. Procédé de supervision, par un centre d'opérations de sécurité (SOC) supervisant au moins un réseau, comprenant :

- une étape de réception (H10), en provenance d'un dispositif du réseau, d'un message d'alerte notifiant une anomalie détectée par un équipement utilisateur connecté au réseau ou par le dispositif du réseau dans un trafic émis via ledit réseau, ledit message d'alerte comprenant des caractéristiques du trafic obtenues par l'équipement utilisateur ou par le dispositif du réseau et associées à l'anomalie détectée, et au moins une information représentative d'au moins une contrainte du dispositif du réseau ;

- une étape de traitement (H30, H80), au moyen d'un algorithme de détection d'attaques informatiques, desdites caractéristiques du trafic, l'algorithme de détection étant sélectionné et/ou paramétré en fonction de ladite au moins une information ; et

- une étape de détermination (H50, H100), en fonction d'un résultat de l'étape de traitement et, si une attaque est détectée, de ladite au moins une information, d'une réponse au dispositif du réseau et/ou à l'équipement utilisateur concernant l'anomalie détectée.

14. Procédé de notification, par un équipement utilisateur (UE) connecté à un réseau, comprenant :

- une étape de détection (E20) d'une anomalie dans un trafic émis via le réseau, à partir de caractéristiques du trafic obtenues par l'équipement utilisateur ;

- si l'équipement utilisateur est incapable de déterminer si l'anomalie détectée correspond à un comportement normal ou à une attaque informatique, une étape d'envoi (E50), à un dispositif du réseau, d'un message d'alerte lui notifiant l'anomalie détectée, ledit message d'alerte comprenant lesdites caractéristiques du trafic et au moins une information représentative d'au moins une contrainte de l'équipement utilisateur ; et

- une étape de réception (E60) d'un message du dispositif de réseau concernant l'anomalie détectée élaboré en fonction de ladite au moins une information.

15. Dispositif d'un réseau (AP) comprenant :

- un module de réception (G-IDA), apte à recevoir un message d'alerte en provenance d'un équipement utilisateur connecté au réseau, ce message d'alerte notifiant une anomalie détectée par l'équipement utilisateur dans un trafic émis via le réseau ;

- un module d'obtention (G-IDA), configuré pour obtenir à partir du message d'alerte au moins une information représentative d'au moins une contrainte de l'équipement utilisateur ;

- un module de traitement (G-IDA), configuré pour traiter au moyen d'un algorithme de détection d'attaques informatiques des caractéristiques du trafic fournies par l'équipement utilisateur et associées à l'anomalie détectée, l'algorithme de détection d'attaques informatiques étant sélectionné et/ou paramétré en fonction de ladite au moins une information ; et

- un module de détermination (G-IDA), configuré pour déterminer en fonction d'un résultat de l'étape de traitement, et si une attaque informatique est détectée, de ladite au moins une information, une réponse à l'équipement utilisateur concernant l'anomalie détectée.

16. Centre d'opérations de sécurité (SOC) supervisant au moins un réseau comprenant :

- un module de réception (C-IDA), apte à recevoir en provenance d'un dispositif du réseau un message d'alerte notifiant une anomalie détectée par un équipement utilisateur connecté au réseau ou par le dispositif du réseau dans un trafic émis via ledit réseau, ce message d'alerte comprenant des caractéristiques du trafic obtenues par l'équipement utilisateur ou par le dispositif du réseau associées à l'anomalie détectée, et au moins une information représentative d'au moins une contrainte du dispositif du réseau ;
- un module de traitement (C-IDA), configuré pour traiter au moyen d'un algorithme de détection d'attaques informatiques, lesdites caractéristiques du trafic, l'algorithme de détection étant sélectionné et/ou paramétré en fonction de ladite au moins une information ; et
- un module de détermination (C-IDA), configuré pour déterminer en fonction d'un résultat de l'étape de traitement et, si une attaque est détectée, de ladite au moins une information, une réponse au dispositif du réseau et/ou à l'équipement utilisateur concernant l'anomalie détectée.

**17.** Equipement utilisateur (UE) connecté à un réseau, comprenant :

- un module de détection (L-IDA), configuré pour détecter une anomalie dans un trafic émis via le réseau à partir de caractéristiques du trafic obtenues par l'équipement utilisateur ;
- un module d'envoi (L-IDA), activé si l'équipement utilisateur est incapable de déterminer si l'anomalie détectée correspond à un comportement normal ou à une attaque informatique, ledit module d'envoi étant configuré pour envoyer à un dispositif du réseau un message d'alerte lui notifiant l'anomalie détectée, ce message d'alerte comprenant lesdites caractéristiques du trafic et au moins une information représentative d'au moins une contrainte de l'équipement utilisateur ; et
- un module de réception (L-IDA), apte à recevoir un message du dispositif de réseau concernant l'anomalie détectée élaboré en fonction de ladite au moins une information.

**18.** Système de surveillance (1) d'un réseau comprenant :

- au moins un équipement utilisateur (UE) selon la revendication 17 ;
- au moins un dispositif du réseau (AP) selon la revendication 15 ; et
- un centre d'opérations de sécurité (SOC) selon la revendication 16.

**19.** Système de surveillance selon la revendication 18 dans lequel le dispositif du réseau est un équipement d'un réseau d'accès du réseau.

**20.** Système de surveillance selon la revendication 18 dans lequel le dispositif du réseau est un équipement d'un cœur du réseau.

**Patentansprüche**

**1.** Verfahren zur Verarbeitung einer von einem mit dem Netzwerk verbundenen Benutzergerät (UE) empfangenen Warnmmeldung durch eine Vorrichtung (AP) eines Netzwerks (NW), wobei die Warnmmeldung eine von dem Benutzergerät in einem über das Netzwerk übertragenen Verkehr detektierte Anomalie anzeigt, das Verfahren zur Verarbeitung umfassend:

- einen Schritt (F30) des Erhaltens mindestens einer Information aus der Warnmeldung, die mindestens eine Einschränkung des Benutzergerätes darstellt;
- einen Verarbeitungsschritt (F50) mittels eines Algorithmus zur Detektion von Computerangriffen, von Merkmalen des von dem Benutzergerät bereitgestellten und der detektierten Anomalie zugeordneten Verkehrs, wobei der Algorithmus zur Detektion von Computerangriffen in Abhängigkeit von der mindestens einen Information ausgewählt und/oder eingestellt wird; und
- einen Schritt zur Bestimmung (F70) einer Antwort an das Benutzergerät bezüglich der detektierten Anomalie in Abhängigkeit von einem Ergebnis des Verarbeitungsschritts und, falls ein Computerangriff detektiert wird, von der mindestens einen Information.

**2.** Verfahren zur Verarbeitung nach Anspruch 1, bei dem die mindestens eine erhaltene Information mindestens eine Einschränkung in Bezug auf die Ressourcen und/oder die Netzwerkleistung des Benutzergerätes darstellt.

**3.** Verfahren zur Verarbeitung nach Anspruch 2, bei dem:

- die Einschränkung in Bezug auf die Ressourcen eine Einschränkung des Energieverbrauchs oder des verfügbaren Speicherplatzes ist;
- die Einschränkung in Bezug auf die Netzwerkleistung eine Einschränkung der Latenz, der Bandbreite, des Durchsatzes, der Verarbeitungszeit von Informationen, die dem Benutzergerät bereitgestellt werden, oder der Menge an überschüssigen Informationen, die dem Benutzergerät bereitgestellt werden, ist.

4. Verfahren zur Verarbeitung nach einem der Ansprüche 1 bis 3, bei dem der Algorithmus zur Detektion von Computerangriffen ausgewählt wird aus:

- einem Algorithmus zur Detektion, der auf Signaturen von Computerangriffen basiert;
- einem Algorithmus zur Detektion durch maschinelles Lernen.

5. Verfahren zur Verarbeitung nach Anspruch 4, bei dem, wenn ein Algorithmus zur Detektion durch maschinelles Lernen in dem Verarbeitungsschritt ausgewählt wird, eine für den Algorithmus berücksichtigte Lernzeit in Abhängigkeit von der mindestens einen Information eingestellt wird.

6. Verfahren zur Verarbeitung nach einem der Ansprüche 1 bis 5, bei dem:

- der Verarbeitungsschritt die Detektion eines Computerangriffs auf ein mit dem Netzwerk verbundenes Benutzergerät und/oder auf ein Element des Netzwerks umfasst; und
- der Schritt zur Bestimmung die Bewertung einer sogenannten Effizienzfunktion auf der Grundlage mindestens einer aus der mindestens einen Information abgeleiteten Metrik und einer Effizienz der Detektion von Angriffen durch das Benutzergerät umfasst, wobei die Antwort in Abhängigkeit von dem Wert der Effizienzfunktion bestimmt wird.

7. Verfahren zur Verarbeitung nach Anspruch 6, bei dem die bestimmte Antwort das Senden einer Nachricht an das Benutzergerät umfasst, die N Signaturen und/oder Attribute des Angriffs umfasst, die von der Vorrichtung des Netzwerks erhalten wurden, wobei N eine ganze Zahl bezeichnet, die von dem Wert der Effizienzfunktion abhängt.

8. Verarbeitungsverfahren nach Anspruch 7, bei dem N außerdem von einem von dem Benutzergerät bereitgestellten Kostenfaktor abhängt.

9. Verfahren zur Verarbeitung nach Anspruch 7 oder 8, bei dem die Signaturen und/oder Attribute des Angriffs von der Vorrichtung des Netzwerks eines Security Operations Center erhalten werden, das das Netzwerk überwacht.

10. Verfahren zur Verarbeitung nach einem der Ansprüche 1 bis 9, das, wenn die Vorrichtung des Netzwerks während des Verarbeitungsschritts nicht in der Lage ist, zu bestimmen, ob die detektierte Anomalie einem normalen Verhalten oder einem Computerangriff entspricht, einen Schritt des Sendens (F80) einer Warnmeldung an ein Security Operations Center (SOC), das das Netzwerk überwacht, umfasst, die ihm die von dem Benutzergerät detektierte Anomalie anzeigt und die von dem Benutzergerät bereitgestellten und der detektierten Anomalie zugeordneten Merkmale des Verkehrs sowie mindestens eine Information umfasst, die eine Einschränkung der Vorrichtung des Netzwerks darstellt.

11. Verfahren zur Verarbeitung nach einem der Ansprüche 1 bis 10, ferner umfassend:

- einen Schritt zur Detektion einer Anomalie in einem über das Netzwerk übertragenen Verkehr durch die Vorrichtung des Netzwerks auf der Grundlage von durch die Vorrichtung des Netzwerks erhaltenen Merkmalen des Verkehrs;
- einen Schritt des Sendens einer Meldung zur Anzeige dieser Anomalie, die die von der Vorrichtung des Netzwerks erhaltenen Merkmale des Verkehrs und mindestens eine Information umfasst, die eine Einschränkung der Vorrichtung des Netzwerks darstellt, an ein Security Operations Centre (SOC), das das Netzwerk überwacht, zur Analyse der von der Vorrichtung des Netzwerks detektierten Anomalie.

12. Verfahren zur Verarbeitung nach einem der Ansprüche 1 bis 11, ferner umfassend, wenn die Vorrichtung des Netzwerks während des Verarbeitungsschritts einen Computerangriff auf ein mit dem Netzwerk verbundenes Benutzergerät und/oder auf ein Element des Netzwerks detektiert, einen Schritt zur Anzeige des detektierten Angriffs an ein Security Operations Center, das das Netzwerk überwacht.

13. Verfahren zur Überwachung durch ein Security Operations Center (SOC), das mindestens ein Netzwerk überwacht, umfassend:

- einen Schritt des Empfangs (H10) einer Warnmeldung von einer Vorrichtung des Netzwerks, die eine Anomalie anzeigt, die von einem mit dem Netzwerk verbundenen Benutzergerät oder von der Vorrichtung des Netzwerks in einem über das Netzwerk übertragenen Verkehr detektiert wurde, wobei die Warnmeldung Merkmale des Verkehrs umfasst, die von dem Benutzergerät oder von der Vorrichtung des Netzwerks erhalten und der detektierten Anomalie zugeordnet werden, und mindestens eine Information, die mindestens eine Einschränkung der Vorrichtung des Netzwerks darstellt;
- einen Verarbeitungsschritt (H30, H80) der Merkmale des Verkehrs mittels eines Algorithmus zur Detektion von Computerangriffen, wobei der Algorithmus zur Detektion in Abhängigkeit von der mindestens einen Information ausgewählt und/oder eingestellt wird; und
- einen Schritt zur Bestimmung (H50, H100) einer Antwort an die Vorrichtung des Netzwerks und/oder das Benutzergerät in Bezug auf die detektierte Anomalie, in Abhängigkeit von einem Ergebnis des Verarbeitungsschritts und, falls ein Angriff detektiert wird, der mindestens einen Information.

**14.** Verfahren zur Anzeige durch ein mit einem Netzwerk verbundenes Benutzergerät (UE), umfassend:

- einen Schritt zur Detektion (E20) einer Anomalie in einem über das Netzwerk übertragenen Verkehr, ausgehend von Merkmalen des Verkehrs, die von dem Benutzergerät erhalten werden;
- wenn das Benutzergerät nicht in der Lage ist, zu bestimmen, ob die detektierte Anomalie einem normalen Verhalten oder einem Computerangriff entspricht, einen Schritt des Sendens (E50) einer Warnmeldung an eine Vorrichtung des Netzwerks, in der die detektierte Anomalie angezeigt wird, wobei die Warnmeldung die Merkmale des Verkehrs und mindestens eine Information umfasst, die mindestens eine Einschränkung des Benutzergerätes darstellt; und
- einen Schritt des Empfangs (E60) einer Nachricht der Vorrichtung des Netzwerks bezüglich der detektierten Anomalie, die in Abhängigkeit von der mindestens einen Information erstellt wurde.

**15.** Vorrichtung eines Netzwerks (AP), umfassend:

- ein Empfangsmodul (G-IDA), das dazu geeignet ist, eine Warnmeldung von einem mit dem Netzwerk verbundenen Benutzergerät zu empfangen, wobei diese Warnmeldung eine von dem Benutzergerät in einem über das Netzwerk übertragenen Verkehr detektierte Anomalie anzeigt;
- ein Modul zum Erhalten (G-IDA), das so konfiguriert ist, dass es aus der Warnmeldung mindestens eine Information erhält, die mindestens eine Einschränkung des Benutzergerätes darstellt;
- ein Verarbeitungsmodul (G-IDA), das so konfiguriert ist, dass es mittels eines Algorithmus zur Detektion von Computerangriffen, Merkmale des von dem Benutzergerät bereitgestellten und der detektierten Anomalie zugeordneten Verkehrs verarbeitet, wobei der Algorithmus zur Detektion von Computerangriffen in Abhängigkeit von der mindestens einen Information ausgewählt und/oder eingestellt wird; und
- ein Modul zur Bestimmung (G-IDA), das so konfiguriert ist, dass es in Abhängigkeit von einem Ergebnis des Verarbeitungsschritts und, falls ein Computerangriff detektiert wird, von der mindestens einen Information eine Antwort an das Benutzergerät bezüglich der detektierten Anomalie bestimmt.

**16.** Security Operations Center (SOC), das mindestens ein Netzwerk überwacht, umfassend:

- ein Empfangsmodul (C-IDA), das dazu geeignet ist, eine Warnmeldung von einer Vorrichtung des Netzwerks zu empfangen, die eine Anomalie anzeigt, die von einem mit dem Netzwerk verbundenen Benutzergerät oder von der Vorrichtung des Netzwerks in einem über das Netzwerk übertragenen Verkehr detektiert wurde, wobei die Warnmeldung Merkmale des Verkehrs umfasst, die von dem Benutzergerät oder von der Vorrichtung des Netzwerks erhalten und der detektierten Anomalie zugeordnet werden, und mindestens eine Information, die mindestens eine Einschränkung der Vorrichtung des Netzwerks darstellt;
- ein Verarbeitungsmodul (C-IDA), das so konfiguriert ist, dass es die Merkmale des Verkehrs mittels eines Algorithmus zur Detektion von Computerangriffen verarbeitet, wobei der Algorithmus zur Detektion in Abhängigkeit von der mindestens einen Information ausgewählt und/oder eingestellt wird; und
- ein Modul zur Bestimmung (C-IDA), das so konfiguriert ist, dass es in Abhängigkeit von einem Ergebnis des Verarbeitungsschritts und, falls ein Angriff detektiert wird, von der mindestens einen Information eine Antwort an die Vorrichtung des Netzwerks und/oder das Benutzergerät bezüglich der detektierten Anomalie bestimmt.

**17.** Benutzergerät (UE), das mit einem Netzwerk verbunden ist, umfassend:

- ein Modul zur Detektion (L-IDA), das so konfiguriert ist, dass es eine Anomalie in einem über das Netzwerk übertragenen Verkehr detektiert, ausgehend von Merkmalen des Verkehrs, die von dem Benutzergerät erhalten werden;
- ein Sendemodul (L-IDA), das aktiviert wird, wenn das Benutzergerät nicht in der Lage ist, zu bestimmen, ob die detektierte Anomalie einem normalen Verhalten oder einem Computerangriff entspricht, wobei das Sendemodul so konfiguriert ist, dass es eine Warnmeldung an eine Vorrichtung des Netzwerks sendet, in der die detektierte Anomalie angezeigt wird, wobei die Warnmeldung die Merkmale des Verkehrs und mindestens eine Information umfasst, die mindestens eine Einschränkung des Benutzergerätes darstellt; und
- ein Empfangsmodul (L-IDA), das dazu geeignet ist, eine Nachricht der Vorrichtung des Netzwerks bezüglich der detektierten Anomalie zu empfangen, die in Abhängigkeit von der mindestens einen Information erstellt wurde.

18. Überwachungssystem (1) eines Netzwerks, umfassend:

- mindestens ein Benutzergerät (UE) nach Anspruch 17;
- mindestens eine Vorrichtung des Netzwerks (AP) nach Anspruch 15; und
- ein Security Operations Center (SOC) nach Anspruch 16.

19. Überwachungssystem nach Anspruch 18, wobei die Vorrichtung des Netzwerks ein Gerät eines Zugangsnetzwerks des Netzwerks ist.

20. Überwachungssystem nach Anspruch 18, wobei die Vorrichtung des Netzwerks ein Gerät eines Kerns des Netzwerks ist.

**Claims**

1. Method for processing, by way of a network (NW) device (AP), an alert message received from a user equipment (UE) connected to the network, said alert message notifying of an anomaly detected by the user equipment in traffic transmitted via the network, said processing method comprising:

- a step (F30) of obtaining, from the alert message, at least one item of information representative of at least one constraint of the user equipment;
- a step (F50) of processing, by way of a cyber attack detection algorithm, features of the traffic that are provided by the user equipment and associated with the detected anomaly, the cyber attack detection algorithm being selected and/or parameterized on the basis of said at least one item of information; and
- a step (F70) of determining, on the basis of a result of the processing step, and if a cyber attack is detected, of said at least one item of information, a response to the user equipment concerning the detected anomaly.

2. Processing method according to Claim 1, wherein said obtained at least one item of information is representative of at least one constraint in terms of resources and/or network performance of the user equipment.

3. Processing method according to Claim 2, wherein:

- the constraint in terms of resources is an energy consumption or available storage space constraint;
- the constraint in terms of network performance is a latency, bandwidth, data rate, time to process information provided to the user equipment or surplus amount of information provided to the user equipment constraint.

4. Processing method according to any one of Claims 1 to 3, wherein the cyber attack detection algorithm is selected from among:

- a detection algorithm based on cyber attack signatures;
- a machine learning-based detection algorithm.

5. Processing method according to Claim 4, wherein, when a machine learning-based detection algorithm is selected in the processing step, a training duration under consideration for said algorithm is parameterized on the basis of said at least one item of information.

6. Processing method according to any one of Claims 1 to 5, wherein:

- the processing step comprises detecting a cyber attack against a user equipment connected to the network and/or against a network element; and

- the determination step comprises evaluating a function, called efficiency function, based on at least one metric derived from said at least one item of information and an attack detection efficiency of the user equipment, the response being determined on the basis of the value of the efficiency function.

7. Processing method according to Claim 6, wherein the determined response comprises sending a message to the user equipment comprising N signatures and/or attributes of the attack that are obtained by the network device, N denoting an integer dependent on the value of the efficiency function.

8. Processing method according to Claim 7, wherein N furthermore depends on a cost factor provided by the user equipment.

9. Processing method according to Claim 7 or 8, wherein the signatures and/or attributes of the attack are obtained by the network device from a security operations centre supervising said network.

10. Processing method according to any one of Claims 1 to 9, comprising, if, in the processing step, the network device is incapable of determining whether the detected anomaly corresponds to normal behaviour or to a cyber attack, a step (F80) of sending, to a security operations centre (SOC) supervising the network, an alert message notifying it of the anomaly detected by the user equipment and comprising the features of the traffic that are provided by the user equipment and associated with the detected anomaly and at least one item of information representative of a constraint of the network device.

11. Processing method according to any one of Claims 1 to 10, furthermore comprising:

- a step of detection, by the network device, of an anomaly in traffic transmitted on the network from features of the traffic that are obtained by the network device;
- a step of sending, to a security operations centre (SOC) supervising the network so as to analyse the anomaly detected by the network device, of a notification message notifying of this anomaly comprising said features of the traffic that are obtained by the network device and at least one item of information representative of a constraint of the network device.

12. Processing method according to any one of Claims 1 to 11, furthermore comprising, if, in the processing step, the network device detects a cyber attack against a user equipment connected to the network and/or against a network element, a step of notifying a security operations centre supervising the network of the detected attack.

13. Supervision method performed by a security operations centre (SOC) supervising at least one network, comprising:

- a step (H10) of receiving, from a network device, an alert message notifying of an anomaly detected by a user equipment connected to the network or by the network device in traffic transmitted via said network, said alert message comprising features of the traffic that are obtained by the user equipment or by the network device and associated with the detected anomaly, and at least one item of information representative of at least one constraint of the network device;
- a step (H30, H80) of processing, by way of a cyber attack detection algorithm, said features of the traffic, the detection algorithm being selected and/or parameterized on the basis of said at least one item of information; and
- a step (H50, H100) of determining, on the basis of a result of the processing step and, if an attack is detected, of said at least one item of information, a response to the network device and/or to the user equipment concerning the detected anomaly.

14. Notification method performed by a user equipment (UE) connected to a network, comprising:

- a step (E20) of detecting an anomaly in traffic transmitted via the network, from features of the traffic that are obtained by the user equipment;
- if the user equipment is incapable of determining whether the detected anomaly corresponds to normal behaviour or to a cyber attack, a step (E50) of sending, to a network device, an alert message notifying it of the detected anomaly, said alert message comprising said features of the traffic and at least one item of information representative of at least one constraint of the user equipment; and
- a step (E60) of receiving a message from the network device concerning the detected anomaly and created on the basis of said at least one item of information.

15. Network device (AP) comprising:

- a reception module (G-IDA), able to receive an alert message from a user equipment connected to the network, this alert message notifying of an anomaly detected by the user equipment in traffic transmitted via the network;
- an obtainment module (G-IDA), configured so as to obtain, from the alert message, at least one item of information representative of at least one constraint of the user equipment;
- a processing module (G-IDA), configured so as to process, by way of a cyber attack detection algorithm, features of the traffic that are provided by the user equipment and associated with the detected anomaly, the cyber attack detection algorithm being selected and/or parameterized on the basis of said at least one item of information; and
- a determination module (G-IDA), configured so as to determine, on the basis of a result of the processing step, and if a cyber attack is detected, of said at least one item of information, a response to the user equipment concerning the detected anomaly.

16. Security operations centre (SOC) supervising at least one network, comprising:

- a reception module (C-IDA), able to receive, from a network device, an alert message notifying of an anomaly detected by a user equipment connected to the network or by the network device in traffic transmitted via said network, this alert message comprising features of the traffic that are obtained by the user equipment or by the network device and associated with the detected anomaly, and at least one item of information representative of at least one constraint of the network device;
- a processing module (C-IDA), configured so as to process, by way of a cyber attack detection algorithm, said features of the traffic, the detection algorithm being selected and/or parameterized on the basis of said at least one item of information; and
- a determination module (C-IDA), configured so as to determine, on the basis of a result of the processing step and, if an attack is detected, of said at least one item of information, a response to the network device and/or to the user equipment concerning the detected anomaly.

17. User equipment (UE) connected to a network, comprising:

- a detection module (L-IDA), configured so as to detect an anomaly in traffic transmitted via the network from features of the traffic that are obtained by the user equipment;
- a sending module (L-IDA), activated if the user equipment is incapable of determining whether the detected anomaly corresponds to normal behaviour or to a cyber attack, said sending module being configured so as to send, to a network device, an alert message notifying it of the detected anomaly, this alert message comprising said features of the traffic and at least one item of information representative of at least one constraint of the user equipment; and
- a reception module (L-IDA), able to receive a message from the network device concerning the detected anomaly and created on the basis of said at least one item of information.

18. Monitoring system (1) for monitoring a network, comprising:

- at least one user equipment (UE) according to Claim 17;
- at least one network device (AP) according to Claim 15; and
- a security operations centre (SOC) according to Claim 16.

19. Monitoring system according to Claim 18, wherein the network device is an equipment of an access network of the network.

20. Monitoring system according to Claim 18, wherein the network device is an equipment of a core network.

[Fig. 1]

[Fig. 2]

[Fig. 3]

```
                              ┌─────────────────┐
                              │    RX ALERT     │──── F10
                              └────────┬────────┘
                                       ▼
                              ┌─────────────────┐
                              │    ACTIV AD     │──── F20
                              └────────┬────────┘
                                       ▼
                              ┌─────────────────┐
                              │ OBT CARACT/CONST│──── F30
                              └────────┬────────┘
                                       ▼
                              ┌─────────────────┐
                              │    CONFIG AD    │──── F40
                              └────────┬────────┘
                                       ▼
                              ┌─────────────────┐
                              │   PROC CARACT   │──── F50
                              └────────┬────────┘
                                       ▼
                                      ╱ ╲          F60
                      oui          ╱       ╲
              ┌──────────────── PROC ANO OK? 
              │                     ╲       ╱
              │                        ╲ ╱
              │                         │ non
              ▼                         ▼
       ┌────────────┐           ┌─────────────────┐
 F70 ──│  PROC ANO  │           │  TX ALERT SOC   │──── F80
       └────────────┘           └────────┬────────┘
              ▲                          ▼
              │                         ╱ ╲          F90
              │           oui        ╱       ╲
              └────────────────── RX FEEDBACK ?
                                     ╲       ╱
                                        ╲ ╱
                                         │ non
                                         ▼
                                  ┌────────────┐
                                  │    STOP    │──── F100
                                  └────────────┘
```

[Fig. 4]

```
                         ┌─────────────────┐
                         │     RX MESS     │──── H10
                         └────────┬────────┘
          ┌───────────────────────┼───────────────────────┐
      (I) │ H20               (II)│ H70            (III)   │ H120
          ▼                       ▼                        ▼
   ┌────────────┐          ┌────────────┐            ┌──────────┐
   │  CONFIG AD │          │  CONFIG AD │            │  UPD DB  │
   └──────┬─────┘          └──────┬─────┘            └──────────┘
          ▼                       ▼
   ┌────────────┐          ┌────────────┐
H30│ PROC CARACT│          │ PROC CARACT│─── H80
   └──────┬─────┘          └──────┬─────┘
          ▼                       ▼
         ╱ ╲  H40                ╱ ╲  H90
   non ╱      ╲           non  ╱      ╲
  ┌──  ATTACK?            ┌──   ATTACK?
  │     ╲      ╱          │      ╲      ╱
  │        ╲ ╱            │         ╲ ╱
  │  H60    │ oui         │  H110    │ oui
  ▼         │             ▼          │
┌──────┐    │          ┌──────┐      │
│ STOP │    │          │ STOP │      │
└──────┘    ▼          └──────┘      ▼
      ┌────────────┐         ┌────────────┐
  H50─│ TX FEEDBACK│         │ TX FEEDBACK│─── H100
      └────────────┘         └────────────┘
```

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2011023119 A1

**Littérature non-brevet citée dans la description**

- **L. FERNANDEZ MAIMO et al.** A self-adaptive deep learning-based system for anomaly detection in 5G networks. *IEEE Access, Special section on cyber-physical-social computing and networking*, 12 March 2018

- **J.MA et al.** Detecting Distributed Signature-based Intrusion : the Case of Multi-Path Routing Attacks. *IEEE Infocom*, 2015, 558-566
- **P.V.KLAINE et al.** A Survey of Machine Learning Techniques Applied to Self-Organizing Cellular Networks. *IEEE Communications Surveys & Tutorials*, 2017, vol. 19 (4), 2392-2431